# EUROPÄISCHE PATENTSCHRIFT

(11) **EP 4 164 798 B1**
(45) Veröffentlichungstag und Bekanntmachung des Hinweises auf die Patenterteilung: **06.05.2026**
(21) Anmeldenummer: 21733071.1
(22) Anmeldetag: 07.06.2021
(51) Int. Cl.: B01L 3/02

(54) **PIPETTIERVORRICHTUNG MIT DURCH GASSCHALL AUSGELÖSTER DISPENSATION VON FLÜSSIGKEITSMENGEN IM BEREICH VON VORZUGSWEISE 10 BIS 500 NL**
PIPETTING DEVICE WITH GAS-SOUND-TRIGGERED DISPENSING OF FLUID AMOUNTS PREFERABLY IN THE RANGE OF 10 TO 500 NL
DISPOSITIF DE PIPETAGE À DISTRIBUTION DÉCLENCHÉE PAR LE GAZ-SON DE QUANTITÉS DE FLUIDE DE PRÉFÉRENCE COMPRISES ENTRE 10 ET 500 NL

(30) Priorität: 10.06.2020 DE 102020115515
(43) Veröffentlichungstag der Anmeldung: 19.04.2023
(73) Patentinhaber: Hamilton Bonaduz AG, 7402 Bonaduz (CH)
(72) Erfinder: GYSEL, Fridolin, 8134 Adliswil (CH); HILTI, Jonas, 9496 Balzers (LI)
(74) Vertreter: Ruttensperger Lachnit Trossin Gomoll
(86) Internationale Anmeldenummer: PCT/EP2021/065185
(87) Internationale Veröffentlichungsnummer: WO 2021/249953

(56) Entgegenhaltungen:
- WO-A1-2012/032503
- WO-A1-2020/074538
- US-A- 5 465 629
- US-A1- 2006 144 871

## Beschreibung

Die vorliegende Erfindung betrifft eine Pipettiervorrichtung zur Abgabe von Mengen einer Dosierflüssigkeit von weniger als 1 µl, umfassend:
- ein Fluidvolumen,
- einen längs einer Kolbenbahn verlagerbaren Pipettierkolben, wobei eine Verlagerung des Pipettierkolbens eine erste Druckänderung im Fluidvolumen bewirkt,
- einen Bewegungsantrieb, welcher mit dem Pipettierkolben in Kraftübertragungsverbindung steht, um den Pipettierkolben zu einer Bewegung längs der Kolbenbahn anzutreiben,
- eine Schallquelle, welche zur Erzeugung wenigstens eines Schallimpulses als eine zweite Druckänderung im Fluidvolumen ausgebildet ist,
- eine Steuervorrichtung, welche dazu ausgebildet ist, den Bewegungsantrieb und die Schallquelle zu steuern.

Die vorliegende Erfindung betrifft insbesondere eine Pipettiervorrichtung, welche Dosierflüssigkeitsmengen im zweistelligen Nanoliterbereich wiederholgenau abgeben kann. Bevorzugt kann die Pipettiervorrichtung Dosierflüssigkeitsmengen von bis zu 50 nl, besonders bevorzugt von bis zu 10 nl wiederholgenau abgeben.

Pipettiervorrichtungen zur Abgabe von derart kleinen Flüssigkeitsmengen im Bereich von 999 bis 10 nl, insbesondere im zweistelligen Nanoliterbereich, werden beispielsweise für Screening-Verfahren in pharmazeutischen und biopharmazeutischen Anwendungen benötigt, in welchen eine sehr wertvolle Prüf-Substanz in möglichst geringen Dosen mit möglichst vielen Reaktions-Substanzen in Kontakt gebracht wird, um das Reaktionsvermögen und -verhalten der Prüf-Substanz möglichst umfangreich zu ermitteln.

Eine Dosiervorrichtung mit den eingangs genannten Merkmalen ist aus der US 2009/0060796 A1 bekannt. Die Dispensation, also Abgabe, kleiner Dosierflüssigkeitsmengen im niedrigen dreistelligen oder im zweistelligen Nanoliterbereich erfolgt an der bekannten Dosiervorrichtung durch einen von der Schallquelle emittierten kegelförmig fokussierten Schallimpuls. Eine konkav ausgeformte Schallausgabefläche der bekannten Schallquelle emittiert den kegelförmig fokussierten Schallimpuls, wobei die Lage des Fokus in Gestalt der Kegelspitze des Schallimpulses durch die gekrümmte Gestalt der Schallausgabefläche bestimmt ist. Durch einen beweglichen Kolben kann der Druck in der Dosierflüssigkeit derart verändert werden, dass ein an der Pipettieröffnung der bekannten Dosiervorrichtung gelegener Meniskus des in der Dosiervorrichtung aufgenommenen Dosierflüssigkeitsvorrats möglichst exakt am Ort des Fokus des Schallimpulses liegt.

Durch den Kolben kann außerdem Dosierflüssigkeit in den Aufnahmeraum zur Aufnahme eines Dosierflüssigkeitsvorrats, aus welchem die kleinen Dosierflüssigkeitsmengen abgegeben werden, gefördert werden. So können die abgegebenen Dosierflüssigkeitsmengen im Dosierflüssigkeitsvorrat wieder ergänzt werden.

Der Dosierflüssigkeitsvorrat der bekannten Vorrichtung liegt stets in einem eigens dafür vorgesehenen Aufnahmeraum und füllt diesen vollständig aus. Der Aufnahmeraum ist daher gasfrei. Eine vom Kolben durch seine Verlagerung bewirkte Druckänderung wird unmittelbar auf den Dosierflüssigkeitsvorrat ausgeübt. Eine dem Dosierflüssigkeitsvorrat zugewandte Kolbenfläche ist von Dosierflüssigkeit benetzt.

Die Schallquelle ist bevorzugt ebenfalls im Dosierflüssigkeitsvorrat angeordnet, sodass die Schallausgabefläche ebenfalls von Dosierflüssigkeit benetzt ist. Abweichend davon kann die Schallausgabefläche auch von einem Arbeitsgas benetzt sein. Dann breitet sich der von der Schallausgabefläche emittierte fokussierte Schallimpuls zunächst im Arbeitsgas aus, überschreitet eine erste Raumwand, welche einen Raum einhaust, in dem die Schallquelle angeordnet ist und der nur mit Arbeitsgas gefüllt ist, überschreitet eine zweite Raumwand, welche einen Raum einhaust, in dem die Pipettieröffnung ausgebildet ist und der nur mit Dosierflüssigkeit gefüllt ist, und trifft fokussiert auf den in der Pipettieröffnung angeordneten Meniskus des Dosierflüssigkeitsvorrats als einer Grenzfläche des Dosierflüssigkeitsvorrats zu der die Pipettieröffnung umgebenden Atmosphäre.

Der Aufbau und der Betrieb der aus der US 2009/0060796 A1 bekannten Dosiervorrichtung sind außerordentlich kompliziert.

Eine weitere Dosiervorrichtung, welche geeignet ist, die Abgabe sehr kleiner Dosierflüssigkeitsmengen an einer Pipettieröffnung mit akustischen Wellen zu bewirken, ist aus der WO 00/45955 A1 bekannt. Wie in der US 2009/0060796 A1 werden auch an der Dosiervorrichtung der WO 00/45955 A1 akustische Wellen durch Piezoelemente erzeugt. Die Piezoelemente umgeben ein Rohr, welches den Pipettierkanal definiert. Durch impulsartige Aktivierung der Piezoelemente wird das Rohr lokal kurzzeitig radial kontrahiert, wodurch ein Druckstoß in die im Rohr aufgenommene Dosierflüssigkeit eingeleitet wird, der sich in der inkompressiblen Dosierflüssigkeit fortpflanzt und schließlich an einer Pipettieröffnung zur Abgabe eines Tropfens der Dosierflüssigkeit führt. Die aus der WO 00/45955 A1 bekannte Pipettiervorrichtung funktioniert nur bei ausreichend gefülltem Pipettierkanalrohr, da die Kontraktionen der Piezoelemente unter Vermittlung des Pipettierkanalrohrs unmittelbar auf die inkompressible Dosierflüssigkeit übertragen werden müssen, um an der Pipettieröffnung eine Ablösung eines Tropfens von weniger als 1 µl bewirken zu können.

Zum weiteren Stand der Technik sei ergänzend auf die US 6,861,034 B1 verwiesen, welche mit durch Fresnel-Linsen fokussierten Schallimpulsen arbeitet und ebenfalls sehr kompliziert aufgebaut ist.

Aus der US 5,465,629 ist eine Pipettiervorrichtung mit einem von einem Arbeitsgas benetzten Pipettierkolben bekannt, welche eine Schallquelle und einen Schallsensor als Erfassungsanordnung einsetzt, um zu erkennen, ob in der Pipettiervorrichtung überhaupt eine Pipettenspitze angekoppelt ist und ob die Pipettieröffnung der Pipettenspitze offen oder bedeckt ist sowie zur Erfassung eines Füllstands an Dosierflüssigkeit im Aufnahmeraum der Pipettenspitze.

Aus der WO 2020/074538 A1 ist eine nach dem Air-Displacement-Verfahren arbeitende Pipettiervorrichtung mit linearmotorisch angetriebenem Pipettierkolben bekannt. Durch einen Drucksensor kann an dieser Pipettiervorrichtung der Druck des Arbeitsgases erfasst werden.

Aus der WO 2012/032503 A1 ist ein Tröpfchen-Dispensierer mit einem Piezoaktuator bekannt, welcher zur Auslösung einer Tröpfchenabgabe ähnlich der zuvor genannten WO 00/45955 A1 auf einen mit Dosierflüssigkeit gefüllten Kanal des Dispensierers einwirkt.

Es ist Aufgabe der vorliegenden Erfindung die eingangs genannte Pipettiervorrichtung derart weiterzubilden, dass sie mit möglichst einfachem Aufbau und robustem Betrieb eine wiederholgenaue Dispensation von Dosierflüssigkeitsmengen von weniger als 1 µl bis hinab zu 50 nl oder sogar 10 nl ermöglicht.

Diese Aufgabe wird durch die vorliegende Erfindung mit einer Pipettiervorrichtung gelöst, welche die eingangs genannten Merkmale aufweist und welche zusätzlich einen sich längs einer Kanalachse erstreckenden Pipettierkanal umfasst, in dem sowohl der Kolben längs der Kanalachse als der Kolbenbahn beweglich aufgenommen ist als auch das Fluidvolumen aufgenommen ist, wobei das Fluidvolumen ein Arbeitsgas umfasst, welches eine Kolbenfläche des Pipettierkolbens benetzt, wobei weiter die Schallquelle zur Erzeugung wenigstens eines Schallimpulses im Arbeitsgas ausgebildet und angeordnet ist.

Anders als bei der oben genannten Dosiervorrichtung der US 2009/0060796 A1 wird das Arbeitsgas als Kraftvermittlungsmedium sowohl für den Pipettierkolben als auch für die Schallquelle verwendet. Das Fluidvolumen der erfindungsgemäßen Pipettiervorrichtung umfasst im dispensierbereiten Betriebszustand einen Dosierflüssigkeitsvorrat im Pipettierkanal, aus welchem die Dosierflüssigkeitsmengen gasschallinduziert dispensiert werden sollen, und umfasst ein Arbeitsgasvolumen, welches zwischen Schallquelle und Pipettierkolben auf der einen Seite und Dosierflüssigkeitsvorrat auf der anderen Seite eingeschlossen ist. Die eingeschlossene Menge an Arbeitsgas muss nicht für jeden Pipettiervorgang dieselbe sein. Wenn jedoch ein Dosierflüssigkeitsvorrat im Pipettierkanal aufgenommen ist, dann ist die Menge an Arbeitsgas unter Vernachlässigung von Verdunstungsvorgängen am Dosierflüssigkeitsvorrat und etwaigen Leckagestörungen im Wesentlichen konstant.

Der Pipettierkolben kann in einem herkömmlichen Air-Displacement-Verfahren durch die erste Druckänderung Dosierflüssigkeit in den Pipettierkanal aspirieren und kann, worauf weiter unten näher eingegangen wird, durch Bewirken einer ersten Druckänderung die Gestalt eines pipettieröffnungsnäheren Meniskus des aspirierten Dosierflüssigkeitsvorrats beeinflussen.

Die Schallquelle kann durch Ausgabe des wenigstens einen Schallimpulses die zweite Druckänderung erzeugen und damit die dispensierende Ablösung eines Tröpfchens am pipettieröffnungsnäheren Meniskus als der gewünschten kleinen Dosierflüssigkeitsmenge bewirken. Die Schallquelle wird dabei in der Regel einen Schallimpuls ausgeben, dessen Dauer, Amplitude und Frequenz als veränderbare Parameter die Veränderung der durch die Schallimpulse dispensierten Dosierflüssigkeitsmenge ermöglichen. Die Veränderung der Parameter erfolgt durch die Steuervorrichtung, beispielsweise nach Maßgabe einer vorgegebenen Kalibrationsinformation, welche für eine gegebene Dosierflüssigkeit unterschiedlichen zu dispensieren Dosierflüssigkeitsmengen unterschiedliche Schallimpulsformen zuordnet. Mit dem Begriff der "Schallimpulsform" ist in der vorliegenden Anmeldung die Ausprägung eines Schallimpulses durch betragsmäßige Auswahl der oben genannten Parameter bezeichnet. Schallimpulsformen können sich daher hinsichtlich Dauer, Amplitude, insbesondere Amplitude als Funktion der Zeit, Frequenz, usw. unterscheiden.

Als Schallimpuls wird dabei wenigstens eine Schall-Teilschwingung mit einer Dauer einer Schwingungsperiode oder kürzer verstanden, etwa eine Halbschwingung. Da bevorzugt eine den Schallimpuls ausgebende Schallausgabefläche sich am Ende der Ausgabe des Schallimpulses wieder in der Ausgangsstellung befindet, in der sie sich unmittelbar vor Ausgabe des Schallimpulses befand, ist ein Schallimpuls bevorzugt entweder eine Halbschwingung oder eine vollständige Schallschwingung. Von diesen Alternativen ist die vollständige Schallschwingung bevorzugt, umfassend eine vollständige Longitudinalschwingung mit positiver und negativer Amplitude, also mit der der Dauer einer Schwingungsperiode. Mit positiver Amplitude, also in positive Koordinatenrichtung ausgehend von der Ausgangsstellung der Schallausgabefläche, bewegt sich die Schallausgabefläche der Schallquelle ausgehend von ihrer Ausgangsstellung auf einen in der bestimmungsgemäßen Schall-Abstrahlrichtung vor Schallausgabefläche befindlichen Betrachter zu, mit negativer Amplitude, also in negativer Koordinatenrichtung ausgehend von der Ausgangsstellung der Schallausgabefläche, von diesem weg. Dabei ist zur Ausbildung eines zur Auslösung einer Abgabe einer in der vorliegenden Anmeldung genannten kleinen Dosierflüssigkeitsmenge bevorzugt, wenn die negative Amplitude betragsmäßig kleiner ist als die positive Amplitude oder/und wenn die Auslenkung der Schallausgabefläche zur Ausgabe eines Schallimpulses im negativen Koordinatenbereich zeitlich kürzer dauert als im positiven Koordinatenbereich.

Die Ausgabe eines bevorzugt scharfen Schallimpulses beginnt daher mit einer Auslenkung der Schallausgabefläche in positiver Koordinatenrichtung, erreicht ihren Maximalwert in der positiven Amplitude, kehrt von dort in die Ausgangsstellung zurück, woraufhin die Schallausgabefläche in negative Koordinatenrichtung ausgelenkt wird, dabei ihre negative Amplitude erreicht und wieder in ihre Ausgangsstellung zurückkehrt. Für eine Ausbreitung einer zweiten Druckschwankung irrelevantes Nachschwingen der Schallausgabefläche kann aufgrund von Massenträgheit auftreten, ist jedoch vernachlässigbar.

Grundsätzlich kann die Schallquelle auch zur Abgabe kontinuierlicher Schallwellen mit einer Dauer von mehreren Schwingungsperioden ausgebildet sein, wenngleich die Ausgabe von kontinuierlichen Schallwellen mit einer Dauer von mehreren Schwingungsperioden zur schalldruckinduzierten Dispensation kleiner Dosierflüssigkeitsmengen weniger relevant sind als die Ausgabe von scharfen Druckimpulsen in Form von Schallimpulsen mit einer Dauer von nicht mehr als einer Schwingungsperiode. Eine Schallwelle kann als Folge einer Mehrzahl von ununterbrochen aufeinander folgenden Schallimpulsen aufgefasst werden.

Zwar befindet sich mit dem zwischen dem Dosierflüssigkeitsvorrat einerseits und dem Pipettierkolben sowie der Schallquelle andererseits angeordneten kompressiblen Arbeitsgas eine Gasfeder zwischen den Druckänderungsmitteln und dem Dosierflüssigkeitsvorrat, was eine präzise Steuerung der Pipettiervorrichtung erschwert. Jedoch lassen sich andererseits an der Pipettiervorrichtung bekannte und bewährte Air-Displacement-Verfahren nutzen. Darüber hinaus kann die Schallquelle zur Abgabe derart vieler unterschiedlicher Schallimpulsformen angesteuert werden, dass für nahezu jede Dosierflüssigkeit und nahezu jede abzugebende Dosierflüssigkeitsmenge im Bereich kleiner als 1 µl, vorzugsweise kleiner als 500 µl, aber größer als 50 nl, bevorzugt größer als 10 nl, eine passende Schallimpulsform auffindbar und nutzbar ist.

Die Komplexität der Steuerung ist folglich durch einmalige Ermittlung einer Kalibrationsinformation ohne weiteres handhabbar, wobei die Kalibrationsinformation die Dosierflüssigkeit oder Dosierflüssigkeitsklasse, die Schallimpulsform und die abgegebene Dosierflüssigkeitsmenge als Parameter miteinander verknüpft. Diese Kalibrationsinformation muss jedoch nur einmal erarbeitet werden und kann dann an den erfindungsgemäßen Pipettiervorrichtungen wiederholt genutzt werden. Dem gegenüber steht eine erhebliche Vereinfachung des konstruktiven Aufbaus der Pipettiervorrichtung, welche im Wesentlichen einer herkömmlichen Air-Displacement-Pipettiervorrichtung entspricht, die zur Einkopplung von Gasschall in das Arbeitsgas im Pipettierkanal ausgebildet ist.

Zur Einkopplung von Schall unmittelbar in das Arbeitsgas weist die Schallquelle eine den wenigstens einen Schallimpuls erzeugende Schallausgabefläche auf, welche bevorzugt vom Arbeitsgas benetzt ist. In der überwiegenden Mehrzahl von Fällen wird die Schallausgabefläche eine Membran sein, welche in an sich bekannter Weise zu Schwingungen und damit zur Ausgabe eines Schallimpulses anregbar ist. Die Anregung kann durch eine Tauchspule, durch ein Piezoelement, magnetostatisch, elektrostatisch oder elektromagnetisch erfolgen. Entsprechende Lautsprecher als Schallquellen sind hinlänglich bekannt. Auch Air-Motion-Transformer oder Bändchenlautsprecher können Schallquellen der Pipettiervorrichtung sein.

Über Membran-Lautsprecher hinaus sollen auch membranlose Lautsprecher als Schallquellen nicht ausgeschlossen sein, wie etwa Plasma-Lautsprecher. In diesem Falle ist die Flammenfront der Plasmaflamme als Schallausgabefläche bevorzugt vom Arbeitsgas benetzt.

Zwar kann nie ausgeschlossen werden, dass durch die Schallquelle neben dem Gasschall auch Körperschall erzeugt wird, etwa in einem den Pipettierkanal definierenden und damit wenigstens einen Teil des Arbeitsgases aufnehmenden Kanalrohr. Jedoch ist vorliegend die durch das Arbeitsgas zum Dosierflüssigkeitsvorrat hin übertragene Schallenergie pro Zeiteinheit betragsmäßig größer als etwaig durch Körperschall übertragene Schallenergie. Unvermeidlicher Körperschall spielt nur eine untergeordnete Rolle.

Räumlich kann die Schallquelle zusätzlich zum Pipettierkolben dadurch am Pipettierkanal vorgesehen sein, dass vom Pipettierkanal ein Nebenraum mit einem Nebenraumvolumen absteht. Das Nebenraumvolumen bildet mit dem Kanalvolumen des Pipettierkanals ein zusammenhängendes, Arbeitsgas enthaltendes Volumen. Die Schallquelle erzeugt den wenigstens einen Schallimpuls im Nebenraumvolumen. Da das Nebenraumvolumen mit dem Kanalvolumen ein zusammenhängendes Volumen bildet, kann ein im Nebenraumvolumen erzeugter Schallimpuls sich ohne weiteres in dem im Pipettierkanal aufgenommenen Arbeitsgas zur Pipettieröffnung hin ausbreiten.

Als Kanalachse wird gemäß der vorliegenden Anmeldung eine virtuelle Mittellinie verstanden, welche im Pipettierkanal vom Pipettierkolben weg in Richtung zu einer Pipettieröffnung hin verläuft. Bevorzugt verläuft der Pipettierkanal von einer Pipettieröffnung bis zu einer von der Pipettieröffnung am weitesten entfernten Betriebsstellung des Pipettierkolbens längs einer geradlinigen Kanalachse. Dies muss jedoch nicht so sein. Die Kanalachse kann auch einen geknickten bzw. abgewinkelten Verlauf haben. Dann weist der Pipettierkanal in der Regel einen den Pipettierkolben aufnehmenden pipettieröffnungsferneren Ast und einen relativ zu diesem abgewinkelten pipettieröffnungsnäheren Ast auf.

Grundsätzlich kann die Schallquelle im Nebenraum aufgenommen sein, was jedoch zu unerwünscht hohen Nebenraumvolumina führen kann. Ein vorteilhaft kleines Nebenraumvolumen kann dadurch erhalten werden, dass die Schallausgabefläche eine Begrenzungswand des Nebenraums bildet. Dann kann ein Großteil der Schallquelle außerhalb des Nebenraums und damit außerhalb des Nebenraumvolumens angeordnet sein. Im Falle einer Begrenzung des Nebenraums durch die Schallausgabefläche sei eine Auslenkung der Schallausgabefläche aus ihrer Ausgangsstellung, welche das Nebenraumvolumen verkleinert, und somit in der Regel einen Überdruckimpuls auslöst, die positive Koordinatenrichtung der Auslenkung der Schallausgabefläche. Umgekehrt sei dann eine das Nebenraumvolumen vergrößernde Auslenkung der Schallausgabefläche bezüglich ihrer Ausgangsstellung die negative Koordinatenrichtung der Auslenkung der Schallausgabefläche.

Grundsätzlich funktioniert die vorliegend vorgestellte Pipettiervorrichtung unabhängig von der konkreten Gestalt des Nebenraums. Bevorzugt ist der Nebenraum jedoch so gestaltet, dass er eine Ausbreitung eines von der Schallquelle erzeugten Schallimpulses zum Dosierflüssigkeitsvorrat hin unterstützt. Dies kann dadurch erreicht werden, dass der Nebenraum einen sich längs einer Nebenkanalachse erstreckenden Nebenkanal aufweist, welcher in den Pipettierkanal mündet, wobei die Nebenkanalachse mit der Kanalachse einen Winkel einschließt. Bevorzugt ist der Nebenkanal kürzer als der Pipettierkanal. Ebenso bevorzugt ist das durch den Nebenkanal umschlossene Nebenraumvolumen kleiner als das Kanalvolumen des Pipettierkanals. Bevorzugt ist die Nebenkanalachse geradlinig.

Im Falle des oben beschriebenen abgewinkelten Pipettierkanals kann der Nebenkanal in gerader Verlängerung des pipettieröffnungsnäheren Asts des Pipettierkanals verlaufen. Dann sind die Nebenkanalachse und der Abschnitt der Kanalachse im pipettieröffnungsnäheren Ast des Pipettierkanals kollinear. Die Schallquelle kann dann den Schallimpuls in gerader Linie zur Pipettieröffnung hin abgeben.

Der zwischen Nebenkanalachse und Pipettierkanalachse eingeschlossene Winkel kann ein spitzer Winkel sein, den die Nebenkanalachse dann bevorzugt mit dem den Pipettierkolben aufnehmenden Ast des Pipettierkanals und des zugehörigen Kanalachsenabschnitts einschließt. Die Nebenkanalachse kann mit der Kanalachse einen rechten Winkel einschließen, was aufgrund der durch diese Anordnung möglichen verbesserten Bauraumausnutzung bevorzugt ist.

Zur besseren Überwachung eines Dispensationsvorgangs und mehrerer aufeinanderfolgender Dispensationsvorgänge ist es vorteilhaft, den Druck des Arbeitsgases zu kennen. Daher weist die Pipettiervorrichtung gemäß einer bevorzugten Weiterbildung der vorliegenden Erfindung einen Drucksensor auf, welcher einen Arbeitsgasdruck des Arbeitsgases im Fluidvolumen erfasst und ein Drucksignal ausgibt, das den erfassten Arbeitsgasdruck repräsentiert. Das Drucksignal wird bevorzugt zur Steuervorrichtung ausgegeben, die dazu ausgebildet ist, das Drucksignal datenmäßig zu verarbeiten.

Der Nebenkanal mündet in einem Mündungsbereich in den Pipettierkanal. Um sowohl eine erste wie auch eine zweite Druckänderung möglichst schnell ermitteln zu können, ist der Drucksensor bevorzugt derart angeordnet, dass er den Arbeitsgasdruck im Mündungsbereich erfasst. Gemäß einer bevorzugten konstruktiven Ausgestaltung kann im Mündungsbereich ein Erfassungskanal von der Wandung des Mündungsbereichs abgehen, in welchem der Drucksensor angeordnet ist. Durch das Ausbilden eines solchen Erfassungskanals wird weder der Pipettierkanal noch der Nebenkanal durch den Drucksensor gestört. Eine Anordnung des Drucksensors im Pipettierkanalvolumen selbst ist nicht notwendig.

Wie oben bereits angedeutet wurde, kann der Pipettierkolben auch dazu dienen, einen im Pipettierkanal aufgenommenen Dosierflüssigkeitsvorrat für eine nachfolgende Dispensation durch eine zweite Druckänderung vorzubereiten.

Bisherige Versuche haben gezeigt, dass es für eine möglichst exakte Dispensation einer sehr kleinen Dosierflüssigkeitsmenge durch eine gasschallinduzierte zweite Druckänderung von großem Vorteil ist, wenn der pipettieröffnungsnähere Meniskus den Rand der Pipettieröffnung benetzt und eine ebene Gestalt aufweist. Ein solcher Zustand ist unmittelbar nach einer Aspiration, für welche die Pipettieröffnung geringfügig, also im Sub-Millimeter-Bereich, in einen Aspirationsvorrat eingetaucht wurde, ohne weiteres herstellbar. Aufgrund des Eintauchens der Pipettieröffnung während der Aspiration ist der Rand der Pipettieröffnung auch nach dem Ende der Aspiration und nach dem Herausziehen der Pipettieröffnung aus dem Aspirationsvorrat von Dosierflüssigkeit und daher vom pipettieröffnungsnäheren Meniskus benetzt. Aufgrund der geringen Eintauchtiefe der Pipettieröffnung in den Aspirationsvorrat während des Aspirierens ändern sich an der Pipettieröffnung nach dem Herausziehen derselben aus dem Aspirationsvorrat die Druckverhältnisse nicht oder nur in vernachlässigbarer Weise, sodass der den Rand der Pipettieröffnung benetzende Meniskus eine im Wesentlichen ebene Gestalt aufweist.

Nach einem ersten Dispensationsvorgang, bewirkt durch eine zweite Druckänderung, kann dieser Zustand eines den Rand der Pipettieröffnung benetzenden im Wesentlichen ebenen Meniskus wieder hergestellt werden. Durch die Dispensation einer Dosierflüssigkeitsmenge nimmt die Gesamtmenge an im Pipettierkanal aufgenommener Dosierflüssigkeit ab. Somit sinkt auch die vom Arbeitsgas in einem Gleichgewicht zu haltende Masse an Dosierflüssigkeit. Der zunächst im Arbeitsgas herrschende Unterdruck passt nach einem Dispensationsvorgang nicht mehr zu der im Pipettierkanal verbliebenen Menge an Dosierflüssigkeit. Andererseits ist die dispensierte Dosierflüssigkeitsmenge zu gering, als dass sich durch die Dispensation die Lage des pipettieröffnungsnäheren Meniskus ändern würde. Vielmehr ändert sich nur dessen Gestalt. Diese wird sich mit zunehmender dispensierter Menge an Dosierflüssigkeit zunehmend konkav verformen, also in den Pipettierkanal hinein wölben. Durch eine Änderung des Arbeitsgasdrucks kann diese an sich unerwünschte Wölbung rückgängig gemacht oder zumindest betragsmäßig verringert werden.

Bevorzugt ist also die Steuervorrichtung dazu ausgebildet, auf Grundlage wenigstens eines Drucksignals des Drucksensors sowie auf Grundlage von Daten, die in einem von der Steuervorrichtung abfragbaren Datenspeicher hinterlegt sind, zwischen einer ersten, früheren Abgabe einer Dosierflüssigkeitsmenge von weniger als 1µl und einer auf diese unmittelbar folgenden zweiten, späteren Abgabe einer Dosierflüssigkeitsmenge von weniger als 1µl, jeweils bewirkt durch eine zweite Druckänderung, einen im Pipettierkanal aufgenommenen Dosierflüssigkeitsvorrat zu konditionieren, wobei die Steuervorrichtung zu diesem Zweck dazu ausgebildet ist,
- einen Anfangsmengenwert zu ermitteln, welcher eine Anfangsmenge an Dosierflüssigkeit repräsentiert, die im Pipettierkanal nach der Abgabe der ersten und vor der Abgabe der zweiten Dosierflüssigkeitsmenge aufgenommen ist,
- abhängig von dem ermittelten Anfangsmengenwert sowie abhängig von einer im Datenspeicher hinterlegten Anfangsmengenwert-Arbeitsgasdruck-Zuordnungsinformation, welche unterschiedlichen Anfangsmengenwerten jeweils einen Soll-Arbeitsgasdruck zuordnet, einen Soll-Arbeitsgasdruck für das im Pipettierkanal vorhandene Arbeitsgas zu ermitteln, und
- den Bewegungsantrieb zur Bewegung des Pipettierkolbens im Pipettierkanal derart anzusteuern, dass der vom Drucksensor erfasste Ist-Arbeitsgasdruck dem ermittelten Soll-Arbeitsgasdruck entspricht.

Die Anfangsmengenwert-Arbeitsgasdruck-Zuordnungsinformation kann vorab für eine Vielzahl von Dosierflüssigkeiten, gewünschtenfalls abhängig von der Temperatur und weiteren Parametern, im Labor bestimmt werden. Sie ordnet einer im Pipettierkanal aufgenommenen Dosierflüssigkeitsmenge jenen Arbeitsgasdruck zu, bei welchem der pipettieröffnungsnähere Meniskus voraussichtlich eine ebene Gestalt haben wird. Diesen Arbeitsgasdruck stellt die Steuervorrichtung durch Bewegung des Pipettierkolbens in dem im Pipettierkanal aufgenommenen Arbeitsgas bereit.

Durch den oben genannten Konditionierungsvorgang wird eine Krümmung des pipettieröffnungsnäheren Mensikus wenigstens betragsmäßig reduziert, vorzugsweise beseitigt.

Der Pipettierkolben kann ein herkömmlicher Pipettierkolben sein, welcher durch einen mechanischen Bewegungsantrieb, etwa einen Spindeltrieb, zur Bewegung angetrieben wird. Der Pipettierkolben kann jedoch auch in an sich bekannter Weise einen oder mehrere Permanentmagnete aufweisen und als Läufer eines linearmotorischen Bewegungsantriebs dienen. Im letztgenannten Fall umfasst der Bewegungsantrieb von der Steuervorrichtung bestrombare Magnetspulen, welche längs der Kanalachse aufeinanderfolgend den Pipettierkanal umgeben. Der Vorteil eines linearmotorisch bewegbaren Pipettierkolbens liegt in seiner hohen Bewegungsdynamik sowie in der Möglichkeit einer spielfreien Bewegungsrichtungsumkehr.

Grundsätzlich kann der Anfangsmengenwert der vor einem Dispensationsvorgang im Pipettierkanal aufgenommenen Dosierflüssigkeitsmenge von der Steuervorrichtung in beliebiger Weise ermittelt werden, auch gravimetrisch. Für eine möglichst schnelle Ermittlung des Anfangsmengenwerts und damit zur Erzielung einer möglichst raschen Abfolge von exakten Dispensationsvorgängen, ist die Steuervorrichtung bevorzugt dazu ausgebildet, den Anfangsmengenwert zu ermitteln auf Grundlage eines vorhergehenden bekannten Anfangsmengenwerts und einer seit Geltung dieses vorhergehenden bekannten Anfangsmengenwerts abgegebenen Dosierflüssigkeitsmenge. Somit kann der Anfangsmengenwert iterativ bzw. inkrementell ermittelt werden. Denn unmittelbar nach der Aspiration eines Dosierflüssigkeitsvorrats ist die aufgenommene Anfangsmenge und damit der Anfangsmengenwert bekannt. Nach jedem Dispensationsvorgang kann der vorhergehende Anfangsmengenwert um die dispensierte Dosierflüssigkeitsmenge auf einen neuen Anfangsmengenwert aktualisiert werden.

Zur Ermittlung der in einem Dispensationsvorgang dispensierten Dosierflüssigkeitsmenge kann die Steuervorrichtung dazu ausgebildet sein, eine in einem Zeitabschnitt abgegebene Dosierflüssigkeitsmenge zu ermitteln auf Grundlage einer Anzahl von in diesem Zeitabschnitt von der Schallquelle zur Dosierflüssigkeitsmengenabgabe erzeugten Schallimpulsen, auf Grundlage ihrer jeweiligen Schallimpulsform und auf Grundlage von im Datenspeichern hinterlegter Schallimpuls-Abgabemenge-Zuordnungsinformation, welche für wenigstens eine Dosierflüssigkeit unterschiedlichen Schallimpulsformen eine durch die jeweilige Schallimpulsform abgegebene Dosierflüssigkeitsmenge zuordnet.

Die Schallimpuls-Abgabemenge-Zuordnungsinformation kann wiederum für eine Vielzahl von Dosierflüssigkeiten, gewünschtenfalls unter Berücksichtigung weiterer Parameter, wie etwa der Temperatur, vorab im Labor ermittelt werden. Dann kann die Steuervorrichtung auf Grundlage der ausgegebenen Schallimpulsformen die damit abgegebenen Dosierflüssigkeitsmengen abschätzen. Alternativ kann die Steuervorrichtung schlicht die Soll-Dispensationsmenge eines vorhergehenden Dispensationsvorgangs heranziehen.

Eine weitere Möglichkeit zur Qualitätssicherung wird durch Kenntnis der Position des Pipettierkolbens längs der Kanalachse eröffnet. Daher weist die Pipettiervorrichtung bevorzugt einen Kolben-Positionssensor zur Erfassung der Position des Pipettierkolbens längs der Kanalachse auf, welcher ein die erfasste Position des Pipettierkolbens repräsentierendes Kolben-Positionssignal ausgibt. Im Falle eines linearmotorisch angetriebenen Pipettierkolbens kann dieser Positionssensor wenigstens einen Hallsensor umfassen.

Alternativ oder bevorzugt zusätzlich kann die Pipettiervorrichtung einen Schall-Positionssensor zur Erfassung der Position einer Schallausgabefläche der Schallquelle aufweisen, welcher ein die erfasste Position der Schallausgabefläche repräsentierendes Schall-Positionssignal ausgibt. Die Schallausgabefläche ist dabei bevorzugt die oben bereits genannte vom Arbeitsgas benetzte Schallausgabefläche. Durch einen im Arbeitsgas des Pipettierkanals herrschenden Druck - dies kann ein Überdruck oder ein Unterdruck relativ zur Umgebungsatmosphäre der Pipettiervorrichtung sein - kann die Schallausgabefläche aus ihrer zu Beginn der Ausgabe eines Schallimpulses erwarteten oder benötigten Neutralstellung ausgelenkt sein. Als Konsequenz kann die Ansteuerung der Schallquelle zur Ausgabe eines Schallimpulses aufgrund der Störung durch die druckinduzierte Auslenkung die Ausgabe eines vom beabsichtigten Soll-Schallimpuls abweichenden veränderten Schallimpulses bewirken. Dies kann in der Folge wiederum die unerwünschte Abgabe einer von der beabsichtigten Soll-Dosierflüssigkeitsmenge abweichenden veränderten Dosierflüssigkeitsmenge bewirken.

Zur Sicherstellung einer möglichst hohen Dosiergenauigkeit kann die Steuervorrichtung dazu ausgebildet sein, die Schallausgabefläche vor Beginn der Ausgabe eines Schallimpulses abhängig vom Schall-Positionssignal durch Ansteuerung der Schallquelle in eine vorbestimmte Ausgangsstellung zu verstellen. Dadurch kann sichergestellt werden, dass die aus der vorbestimmten Ausgangsstellung zur Ausgabe eines Schallimpulses angesteuerte Schallausgabefläche möglichst exakt jenen Schallimpuls ausgibt, den die Steuervorrichtung nach Maßgabe hinterlegter Daten einer abzugebenden Dosierflüssigkeitsmenge zuordnet.

Zur Qualitätsüberwachung bzw. -sicherung kann die Steuervorrichtung gemäß einer bevorzugten Weiterbildung der vorliegenden Erfindung dazu ausgebildet sein, eine Soll-Kolbenposition des Pipettierkolbens zu ermitteln aus entweder
- einer im Datenspeicher hinterlegten Anfangsmengenwert-Kolbenposition-Zuordnungsinformation, welche für wenigstens eine Dosierflüssigkeit unterschiedlichen Anfangsmengenwerten je eine Soll-Kolbenposition zuordnet, oder
- aus einer im Datenspeicher hinterlegten Arbeitsgasdruck-Kolbenposition-Zuordnungsinformation, welche für wenigstens eine Dosierflüssigkeit unterschiedlichen Soll-Arbeitsgasdrücken je eine Soll-Kolbenposition zuordnet,
wobei die Steuervorrichtung weiter dazu ausgebildet ist, nach Ansteuerung des Bewegungsantriebs zur Änderung des Ist-Arbeitsgasdrucks auf den Soll-Arbeitsgasdruck, auf Grundlage des Kolben-Positionssignals eine Ist-Kolbenposition des Pipettierkolbens zu ermitteln und mit der Soll-Kolbenposition zu vergleichen und abhängig vom Ergebnis des Vergleichs eine Qualitätsinformation über eine Genauigkeit eines zurückliegenden Dispensationsvorgangs an einer Ausgabevorrichtung auszugeben.

Die Verwendung von Anfangsmengenwerten und Arbeitsgasdrücken ist funktional gleichwertig, da, wie oben dargelegt, der im Pipettierkanal eingestellte Soll-Arbeitsgasdruck auf einem ermittelten Anfangsmengenwert beruht und damit ein eindeutiger und hinreichender funktionaler Zusammenhang zwischen diesen Werten besteht.

Wiederum kann die Kolbenposition-Zuordnungsinformation, sei es nun beruhend auf Anfangsmengenwerten oder auf Arbeitsgasdrücken, vorab im Labor für eine Vielzahl von Dosierflüssigkeiten, gewünschtenfalls unter Berücksichtigung weiterer Parameter, wie der Temperatur, ermittelt werden.

Die Idee der Qualitätsüberwachung ist dabei so einfach wie überzeugend: dann, wenn die tatsächlich abgegebenen Dosierflüssigkeitsmengen mit den für eine Abgabe beabsichtigten Soll-Dosierflüssigkeitsmengen übereinstimmen, wird die Ist-Kolbenposition mit der Soll-Kolbenposition übereinstimmen. Weichen die tatsächlich abgegebenen Dosierflüssigkeitsmengen von den Soll-Dosierflüssigkeitsmengen ab, aus welchem Grund auch immer, gibt der auf Grundlage der abgegebenen Dosierflüssigkeitsmengen abgeschätzte Anfangsmengenwert die tatsächlich im Pipettierkanal aufgenommene Menge an Dosierflüssigkeitsvorrat nicht exakt wieder, sodass der Pipettierkolben bei Einstellung des oben ermittelten Soll-Arbeitsgasdrucks nicht an der Soll-Kolbenposition, sondern einer davon abweichenden Kolbenposition zu liegen kommen wird.

Da die abgegebenen Dosierflüssigkeitsmengen sehr gering sind und da weiter wenigstens ein Teil der oben beschriebenen Werteermittlungen auf Schätzverfahren beruhen, ist es zur Vermeidung einer Ausgabe zu vieler Warnhinweise im Falle vermeintlich fehlerhafter Dispensationen hilfreich, wenn die Steuervorrichtung dazu ausgebildet ist, wenigstens dann oder bevorzugt nur dann eine Qualitätsinformation, insbesondere einen Warnhinweis wegen zu ungenauer Dispensation, auszugeben, wenn der Unterschied zwischen der Ist-Kolbenposition und der Soll-Kolbenposition betragsmäßig einen vorbestimmten Toleranzunterschiedswert übersteigt. Der Toleranzunterschiedswert kann auf Grundlage der unvermeidlichen Dosierfehler aufgrund von Ungenauigkeiten in Fertigung und Betrieb der Pipettiervorrichtung sowie auf Grundlage von Ungenauigkeiten in den angewandten Schätzverfahren der Wertermittlungen bestimmt werden.

Grundsätzlich ist es möglich, dass der Pipettierkanal als einstückiges Kanalrohr eine Pipettieröffnung aufweist. Dies ist jedoch aus hygienischen Gründen nicht bevorzugt. Bevorzugt weist der Pipettierkanal eine Pipettieröffnung auf, an welcher oder durch welche hindurch eine Dosierflüssigkeitsmenge von kleiner 1 µl abgegeben wird, wobei die Pipettieröffnung an einer Pipettierspitze ausgebildet ist, welche lösbar mit einem den Pipettierkolben aufnehmenden Pipettierkanalabschnitt verbunden ist. Die Pipettierspitze gilt in ihrem an den übrigen Pipettierkanalabschnitt angekoppelten Zustand als Teil des Pipettierkanals. Die Pipettierspitze kann eine herkömmliche Pipettierspitze mit einem Nenn-Pipettiervolumen von beispielsweise 100 µl bis 10 ml sein.

In einem dispensierbereiten Betriebszustand umfasst das Fluidvolumen zusätzlich zum Arbeitsgas einen Dosierflüssigkeitsvorrat, wobei das Arbeitsgas eine dem Pipettierkolben zugewandte Grenzfläche der Dosierflüssigkeit benetzt. Die Pipettiervorrichtung arbeitet daher sowohl bezüglich der ersten Druckänderung als auch der zweiten Druckänderung nach dem Air-Displacement-Verfahren, wobei das "Air-Displacement" der zweiten Druckänderung auf wenigstens einem Schallimpuls, also auf einer sich im Arbeitsgas als einem Medium in Form einer Longitudinalschwingung oder eines Teils derselben ausbreitenden Druckschwankung beruht.

Die vorliegende Erfindung wird nachfolgend anhand der beiliegenden Zeichnungen näher erläutert werden. Es stellt dar:
- Figur 1: eine erfindungsgemäße Pipettiervorrichtung gegen Ende einer Aspiration einer vorbestimmten Menge an Dosierflüssigkeit,
- Figur 2: die Pipettiervorrichtung von Figur 1 nach Ende des Aspirationsvorgangs, aber noch vor Abgabe einer ersten Dosierflüssigkeitsmenge durch eine gasschallinduzierte zweite Druckänderung,
- Figur 3: die Pipettiervorrichtung von Figur 2 nach Auslösung einer zweiten Druckänderung in dem im Pipettierkanal aufgenommenen Arbeitsgas durch einen Schallimpuls, aber noch vor Ablösung einer Dosierflüssigkeitsmenge,
- Figur 4: die Pipettiervorrichtung von Figur 3 unmittelbar nach Ablösung einer Dosierflüssigkeitsmenge in Tropfenform,
- Figur 5: die Pipettiervorrichtung von Figur 4, nach Abgabe der Dosierflüssigkeitsmenge mit im Wesentlichen konstantem, unbeschalltem Arbeitsgasdruck, und
- Figur 6: die Pipettiervorrichtung von Figur 5 nach einer Konditionierung des im Pipettierkanal verbliebenen Dosierflüssigkeitsvorrats für eine nachfolgende weitere gasschallinduzierte Abgabe einer Dosierflüssigkeitsmenge im Bereich von 500 nl bis 10 nl, insbesondere zweistelligen Nanoliterbereich.

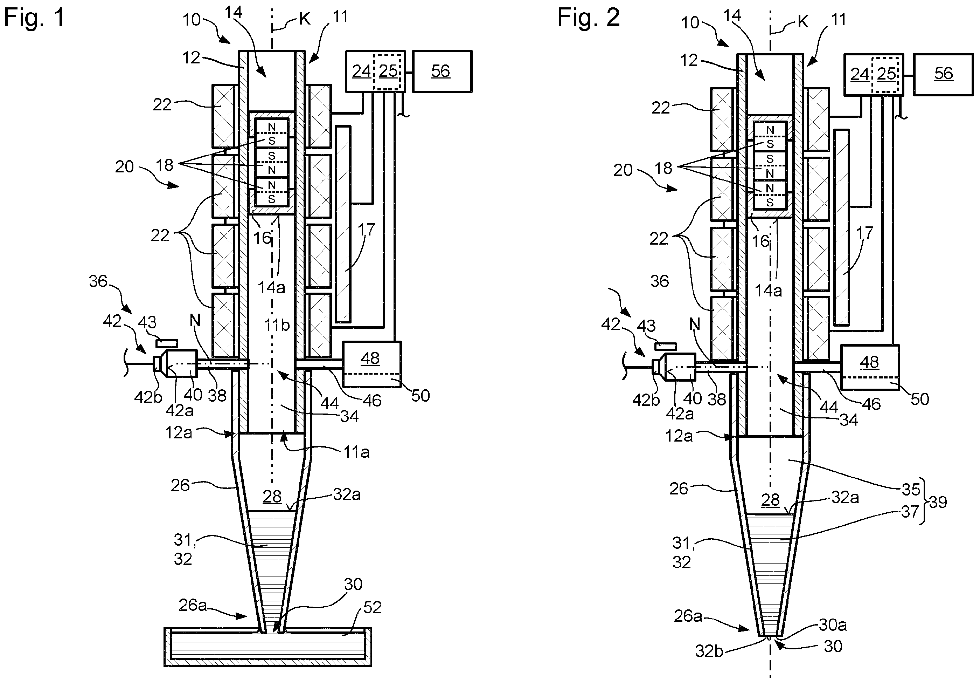

In den Figuren 1 bis 6 ist eine erfindungsgemäße Pipettiervorrichtung allgemein mit 10 bezeichnet. Diese weist einen Pipettierkanal 11 auf, umfassend ein Pipettierkanalrohr bzw. einen Zylinder 12, welcher sich längs einer als geradlinige Kanalachse ausgestalteten Kanalbahn K erstreckt. In diesem Pipettierkanal 11 ist ein Pipettierkolben, oder kurz "Kolben", 14 längs der Kanalbahn K beweglich aufgenommen.

Der Kolben 14 umfasst zwei Endkappen 16 (aus Gründen der Übersichtlichkeit ist nur die untere in den Figuren 1 bis 6 mit Bezugszeichen versehen), zwischen welchen eine Mehrzahl von Permanentmagneten 18 (im vorliegenden Beispiel drei Permanentmagnete 18) aufgenommen sind. Die Permanentmagnete 18 sind zur Erzielung eines längs der Kanalbahn K trennscharfen Magnetfelds längs der Kanalachse K polarisiert und paarweise mit einander unmittelbar benachbarten gleichnamigen Polen angeordnet. Aus dieser Anordnung resultiert ein vom Kolben 14 ausgehendes Magnetfeld, welches um die Kanalachse K weitestgehend gleichförmig, also im Wesentlichen rotationssymmetrisch bezüglich der Kanalachse K ist und welches längs der Kanalachse K einen hohen Gradienten der magnetischen Feldstärke aufweist, sodass sich ungleichnamige Polarisierungszonen trennscharf längs der Kanalbahn K alternierend abwechseln. Damit kann beispielsweise durch eine Kolben-Positionssensoranordnung 17 mit einer Mehrzahl von Hall-Sensoren eine hohe Positionsauflösung bei der Positionserfassung des Kolbens 14 längs der Kanalachse K erreicht werden und es kann eine sehr effiziente Ankopplung eines äußeren Magnetfelds an den Kolben 14 erreicht werden.

Die Endkappen 16 sind bevorzugt aus reibungsarmem, Graphit umfassenden Material gebildet, wie es beispielsweise von kommerziell erhältlichen Kappen der Fa. Airpot Corporation in Norwalk, Connecticut, (US) bekannt ist. Um die von diesem Material bereitgestellte geringe Reibung möglichst vollständig ausschöpfen zu können, umfasst der Pipettierkanal 11 bevorzugt einen Zylinder 12 aus Glas, so dass bei einer Bewegung des Kolbens 14 längs der Kanalachse K das Graphit umfassende Material äußerst reibungsarm an einer Glasfläche gleitet. Der Zylinder 12 oder/und die Endkappen 16 können jedoch alternativ jeweils auch aus einem beliebigen anderen Material gebildet sein.

Der Kolben 14 bildet somit einen Läufer eines Linearmotors 20, dessen Stator von den Pipettierkanal 11 umgebenden Spulen 22 (hier sind beispielhaft lediglich vier Spulen dargestellt) gebildet ist. Die Spulen 22 bilden somit einen Bewegungsantrieb des Kolbens 14.

Es sei ausdrücklich darauf hingewiesen, dass die Figuren 1 bis 6 lediglich eine grobschematische Längsschnittdarstellung einer erfindungsgemäßen Pipettiervorrichtung 10 zeigen, die keinesfalls maßstäblich zu verstehen ist. Dies gilt auch für Bewegungs- und Verlagerungswege, die weder maßstäblich sind noch zueinander in einem korrekten Verhältnis dargestellt sind. Weiterhin sind Mehrzahlen von Bauteilen durch eine beliebige Bauteilanzahl, wie etwa drei Permanentmagnete 18 und vier Spulen 22, dargestellt. Tatsächlich können sowohl die Anzahl der Permanentmagnete 18 wie auch die Anzahl der Spulen 22 größer oder auch kleiner als die dargestellte Anzahl sein.

Der Linearmotor 20, genauer seine Spulen 22, werden über eine Steuervorrichtung 24 angesteuert, die signalübertragungsmäßig mit den Spulen 22 verbunden ist. Als Signal gilt auch die Übertragung elektrischen Stroms zur Bestromung der Spulen und damit zur Erzeugung eines Magnetfelds durch diese.

Die Steuervorrichtung 24 ist signalübertragungsmäßig mit einem Datenspeicher 25 verbunden, in welchem Daten für die Steuervorrichtung 24 abrufbar bereitgestellt sind. Der Datenspeicher 25 ist wenigstens abschnittsweise durch die Steuervorrichtung 24 beschreibbar, so dass die Steuervorrichtung 24 Daten im Datenspeicher 25 ablegen kann.

An dem dosierseitigen Ende 12a des Zylinders 12 ist in an sich bekannter Weise lösbar eine Pipettierspitze 26 angebracht. Die Verbindung der Pipettierspitze 26 mit dem dosierseitigen Längsende 12a des Zylinders 12 ist ebenfalls lediglich grobschematisch dargestellt.

Die Pipettierspitze 26 definiert einen Pipettierraum 28 in ihrem Inneren, welcher im an den Zylinder 12 angekoppelten Zustand von außen ausschließlich am kopplungsfernen Längsende 26a durch eine einzelne Pipettieröffnung 30 zugänglich ist. Die Pipettierspitze 26 verlängert den Pipettierkanal 11 während ihrer Ankopplung an den Zylinder 12 bis zur Pipettieröffnung 30. Durch die Pipettieröffnung 30 hindurch ist in den Pipettierraum 28 eine Dosierflüssigkeit 32 durch Aspiration mittels Bewegung des Kolbens 14 von der Pipettieröffnung weg in an sich bekannter Weise aufnehmbar.

Eine Kolbenfläche 14a des Kolbens 14 ist der Pipettieröffnung 30 der Pipettierspitze 26 ebenso zugewandt wie einem kopplungsseitigen Längsende 11a des dauerhaft an der Pipettiervorrichtung 10 angeordneten Pipettierkanalabschnitts 11b, welches mit dem dosierseitigen Ende 12a des Zylinders 12 zusammenfällt. Im vorliegenden Beispiel ist die Kolbenfläche 14a durch eine in axialer Richtung - bezogen auf die Kanalbahn K - zur Dosieröffnung 30 hinweisende Endfläche der Endkappe 16 gebildet.

Im Pipettierkanal 11 befindet sich wenigstens in einem dem Kolben 14 näher gelegenen Abschnitt ein Arbeitsgas 34 als Kraftvermittlungsmedium, und zwar so, dass es dauerhaft die Kolbenfläche 14a benetzt. Eine Bewegung des Kolbens 14 längs der Kanalachse K bewirkt eine Druckänderung im Arbeitsgas 34, bevorzugt Luft, was wiederum zu einer Kraftwirkung auf eine etwaig im Pipettierraum 28 aufgenommene Anfangsmenge 31 an Dosierflüssigkeit 32 führt.

Vom Pipettierkanal 11 zweigt längs einer Nebenachse N ein Nebenraum 36 ab, welcher einen sich unmittelbar an den Pipettierkanal 11 anschließenden Nebenkanal 38 und eine an den dem Pipettierkanal 11 fernliegenden Längsende des Nebenkanals 38 anschließende Nebenkammer 40 aufweist.

Die Pipettiervorrichtung 10 umfasst weiter eine Schallquelle 42, deren Schallausgabefläche 42a eine Wandung der Nebenkammer 40 bildet und diese begrenzt. Die Schallausgabefläche 42a strahlt Schall längs der Nebenachse N in das Arbeitsgas 34 aus. Die Schallausgabefläche 42a kann mittels eines Aktuators 42b, wie beispielsweise einer Tauchspule oder einem anderen bekannten Aktuatortyp, zur Ausgabe eines Schallimpulses verlagert werden.

Ein Schall-Positionssensor 43 erfasst die Position der Schallausgabefläche 42a und gibt an die Steuervorrichtung 24 ein die Position der Schallausgabefläche 42a repräsentierendes Schall-Positionssignal aus. Die Steuervorrichtung ist bevorzugt dazu ausgebildet, den Aktuator 42b vor Ausgabe eines Schallimpulses nach Maßgabe des Schall-Positionssignals derart anzusteuern, dass die Schallausgabefläche 42a sich vor Ausgabe eines Schallimpulses in einer vorbestimmten Position befindet, sodass die Ausgabe des Schallimpulses in der vorbestimmten Position beginnen kann.

Der Nebenkanal 38 mündet in einem Mündungsbereich 44 in den Pipettierkanal 11, wobei im dargestellten Beispiel die Nebenachse N und die Kanalachse K einen rechten Winkel einschließen, was eine axial vorteilhaft lange mit Spulen 22 bestückte Antriebsstrecke längs der Kanalachse K ermöglicht. In dem Mündungsbereich 44 zweigt ein Erfassungskanal 46 ab, durch welchen ein Drucksensor 48 mit dem Arbeitsgasraum des Pipettierkanals 11 und des Nebenraums 36 zur Erfassung des Arbeitsgasdrucks gekoppelt ist. Zusätzlich zum Drucksensor 48 kann ein Temperatursensor 50 zur Erfassung der Arbeitsgastemperatur vorgesehen sein.

Das Volumen des Nebenraums 36, das Volumen des Erfassungskanals 46 und das Volumen des Pipettierkanals bilden ein gemeinsames zusammenhängendes Volumen. Das im Pipettierkanal 11, im Nebenraum 36 und im Erfassungskanal 46 aufgenommene Arbeitsgasvolumen 35 und das Volumen 37 der im Pipettierraum 28 aufgenommenen Dosierflüssigkeit 32 bilden gemeinsam ein Fluidvolumen 39 (siehe Figur 2).

Die durch die Steuervorrichtung 24 ansteuerbare Schallquelle 42 gibt Schall, insbesondere einen Schallimpuls, unmittelbar an das Arbeitsgas 34 aus, wobei sich der Schallimpuls im Arbeitsgas 34 ausbreitet, auch in Richtung zur Pipettieröffnung 30 und einer darüber angeordneten Anfangsmenge 31 an Dosierflüssigkeit 32 hin. Insbesondere der Aktuator 42b der Schallquelle 42 ist durch die Steuervorrichtung 24 ansteuerbar.

Zur Unterscheidung ist eine durch eine Bewegung des Kolbens 14 im Arbeitsgas 34 bewirkte Druckänderung als erste Druckänderung bezeichnet und ist eine durch Ausgabe eines Schallimpulses im Arbeitsgas 34 bewirkte Druckänderung als zweite Druckänderung bezeichnet.

In Figur 1 ist die Pipettiervorrichtung 10 mit dem kopplungsfernen Längsende 26a der Pipettierspitze 26 in einen Aspirationsvorrat 52 eingetaucht dargestellt. Die Eintauchtiefe beträgt weniger als einen halben Millimeter, bevorzugt weniger als 0,2 mm. Durch Bewegung des Pipettierkolbens 14 von der Pipettieröffnung 30 weg wird eine Anfangsmenge 31 an Dosierflüssigkeit 32 in den Pipettierraum 28 aspiriert. In Figur 1 steht der Aspirationsvorgang zur Aufnahme der Anfangsmenge 31 unmittelbar vor ihrem Abschluss.

In dem in Figur 2 dargestellten Beispiel der Pipettiervorrichtung 10 unmittelbar nach Abschluss eines konventionellen Aspirationsvorgangs durch die Pipettiervorrichtung 10 ist im Pipettierraum 28 - und damit in der Pipettiervorrichtung 10 - ein Vorrat bzw. eine Anfangsmenge 31 an Dosierflüssigkeit 32 aufgenommen.

Zwischen dem Kolben 14 und der Dosierflüssigkeit 32 befindet sich dauerhaft Arbeitsgas 34, welches nicht nur als Kraftvermittlungsmedium zwischen dem Kolben 14 und der Dosierflüssigkeit 32, sondern auch zwischen der Schallquelle 42 und der Dosierflüssigkeit 32 dient. Auch die Schallausgabefläche 42a ist dauerhaft von Arbeitsgas 34, insbesondere nur von Arbeitsgas 34, benetzt. Bevorzugt befindet sich zwischen der Kolbenfläche 14a sowie der Schallausgabefläche 42a einerseits und der Dosierflüssigkeit 32 andererseits nur das Arbeitsgas 34, gegebenenfalls in seiner chemischen Zusammensetzung in vernachlässigbarer Weise verändert durch die Aufnahme flüchtiger Bestandteile aus der Dosierflüssigkeit 32. Das Arbeitsgas 34 benetzt daher auch einen pipettieröffnungsferneren Meniskus 32a der in den Pipettierraum 28 aufgenommenen Dosierflüssigkeit 32.

Aufgrund der sehr geringen Eintauchtiefe während der Aspiration ändern sich die Druckverhältnisse an der Pipettieröffnung 30 nach dem Abheben der Pipettierspitze 26 von dem Aspirationsvorrat 52 nicht oder nur in vernachlässigbarer Weise. Ein pipettieröffnungsnäherer Meniskus 32b ist daher unmittelbar nach der Aspiration und nach einem Abheben der Pipettieröffnung 30 vom Aspirationsvorrat 52 im Wesentlichen eben und benetzt einen Rand 30a der Pipettieröffnung 30. Diese beiden Bedingungen: Benetzung des Rahmens 30a der Pipettieröffnung 30 durch den pipettieröffnungsnäheren Meniskus 32b und ebene Gestalt des pipettieröffnungsnäheren Meniskus 32b sind optimale Voraussetzungen für eine möglichst exakte Dispensation einer sehr kleinen Dosierflüssigkeitsmenge mittels einer durch die Schallquelle 42 bewirkten zweiten Druckänderung im Arbeitsgas 34.

Das Arbeitsgas 34 ist auch bei völlig entleerter Pipettierspitze 26 zwischen Kolben 14 und einer Dosierflüssigkeit 32 angeordnet, da die Pipettierspitze 26 zur Aspiration von Dosierflüssigkeit 32 in einen entsprechenden Dosierflüssigkeitsvorrat eingetaucht wird, sodass in diesem Zustand wenigstens an der Pipettieröffnung 30 ein Meniskus der Dosierflüssigkeit 32 vorhanden ist. Somit befindet sich Arbeitsgas 34 in jedem für einen Pipettiervorgang relevanten Betriebszustand der Pipettiervorrichtung 10 dauerhaft vollständig zwischen dem Kolben 14 und einer Dosierflüssigkeit 32 und trennt diese voneinander.

Die Gestalt des pipettieröffnungsnäheren Meniskus 32b ist beispielsweise abhängig von der Oberflächenspannung der Dosierflüssigkeit 32, von deren Dichte, von deren Viskosität und von der Benetzbarkeit der Wandung der Pipettierspitze 26.

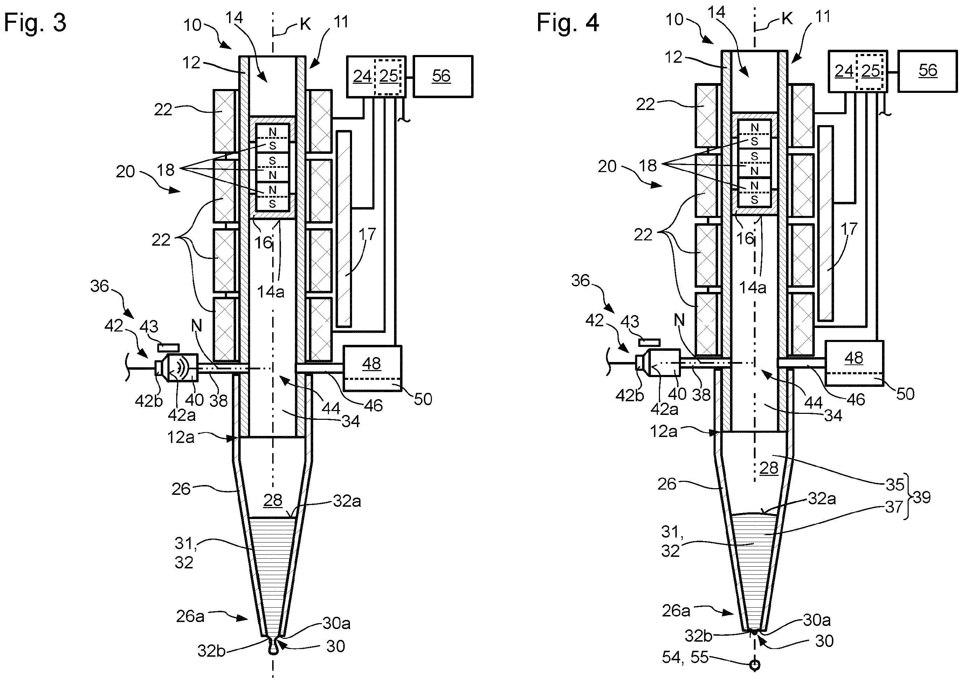

Ausgehend von dem in Figur 2 gezeigten Zustand gibt die Schallquelle 42 gemäß Figur 3 über ihre Schallausgabefläche 42a einen Schallimpuls in das Arbeitsgas 34 ab. Da Schall eine sich in dem Arbeitsgas 34 ausbreitende Druckschwankung ist, trifft der Schallimpuls als Druckimpuls auf den pipettieröffnungsferneren Meniskus 32a. In der im Wesentlichen inkompressiblen Dosierflüssigkeit 32 breitet sich der auf den pipettieröffnungsferneren Meniskus 32a übertragene Druckimpuls über die verhältnismäßig kurze Strecke bis zum pipettieröffnungsnäheren Meniskus 32b weitgehend ungedämpft aus und erreicht den pipettieröffnungsferneren Meniskus 32b, wo der Druckimpuls, wie in Figur 4 dargestellt ist, zur Ablösung einer kleinen Dosierflüssigkeitsmenge 54 führt, die längs der Kanalachse von der Pipettieröffnung 30 weg abgeschleudert wird.

Durch geeignete Wahl von Frequenz, Amplitude und Dauer des Schallimpulses kann die Steuervorrichtung 24 einen Schallimpuls an der Schallquelle 42 auslösen, welcher für die gegebene Dosierflüssigkeit 32 bei der gegebenen Temperatur zur Ablösung eines gewünschten Einzel-Dosiervolumens 54 führt. Der pipettieröffnungsnähere Meniskus 32b kann nach dem Abschleudern des Dosierflüssigkeitstropfens 55 noch kurzzeitig nachschwingen (siehe Figur 4).

Im Datenspeicher 25 ist eine vorab im Labor bestimmte und verifizierte Kalibrationsinformation hinterlegt, welche für eine gegebene Dosierflüssigkeit 32 einem gewünschten zu dispensierenden Einzel-Dosiervolumen 54 die zur Dispensation passende Schallimpulsform hinsichtlich Dauer, Frequenz und Amplitude zuordnet. Gewünschtenfalls kann die Kalibrationsinformation auch die Temperatur der zu dispensierenden Dosierflüssigkeit 32 oder/und des Arbeitsgases 34 bei der Zuordnung der passenden Schallimpulsform berücksichtigen.

Die Kalibrationsinformation kann als Kennfeld, in der Regel mehrdimensionales Kennfeld, oder als analytische Funktionenschar mit den Eingangsgrößen "Dosierflüssigkeit" oder "Dosierflüssigkeitsklasse" und Einzel-Dosiervolumen, sowie gegebenenfalls Flüssigkeits- oder/und Arbeitsgastemperatur im Datenspeicher 25 hinterlegt sein. Die Dosierflüssigkeit oder Dosierflüssigkeitsklasse kann entweder durch eine entsprechende Kennzahl oder durch die Dosierflüssigkeit bzw. die Dosierflüssigkeitsklasse charakterisierende Stoffwerte, wie Viskosität, Dichte usw. bestimmt sein. So kann die Steuervorrichtung 24 ausgehend von dem gewünschten Einzel-Dosiervolumen 54 der bekannten Dosierflüssigkeit 32 mithilfe der Kalibrationsinformation die Betriebsparameter zur Ansteuerung der Schallquelle 42 für die Ausgabe eines passenden Schallimpulses ermitteln.

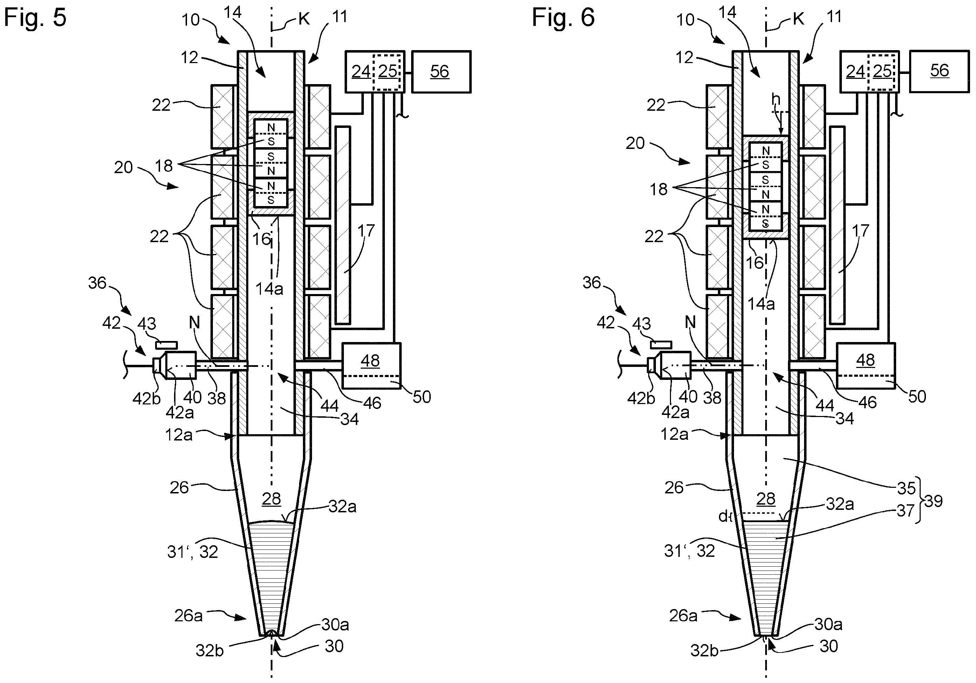

In dem in Figur 5 gezeigten Zustand der Pipettiervorrichtung 10 nach dem Ende des gasschallinduzierten impulsartigen Dispensationsvorgangs befindet sich um das abgegebene Einzel-Dosiervolumen 54 weniger Dosierflüssigkeit 32 im Pipettierraum 28 als vor der Dispensation. Nach wie vor benetzt der pipettieröffnungsnähere Meniskus 32b den Rand 30a der Pipettieröffnung 30. Da der Kolben 14 sich nach wie vor in der gleichen Position befindet wie vor der Dispensation, passt der Unterdruck im Arbeitsgas 34 nicht mehr optimal zu der im Pipettierraum 28 verbliebenen Menge an Dosierflüssigkeit 32, welche eine Anfangsmenge 31' für eine nachfolgende weitere gasschallinduzierte impulsartige Dispensation bildet.

Das Missverhältnis zwischen Arbeitsgasdruck und verbliebener Menge an Dosierflüssigkeit 32 kann aufgrund der zwischen der Dosierflüssigkeit 32 und der Pipettierspitze 26 herrschenden Haftreibung nicht durch Verlagerung der Dosierflüssigkeit 32 in der Pipettierspitze 26 ausgeglichen werden. Ein Gleichgewichtszustand stellt sich daher durch Verformung der Menisken 32a und 32b ein. Die Menisken 32a und 32b wölben sich folglich nach innen in den Pipettierraum 28 hinein. Der pipettieröffnungsfernere Meniskus 32a ist nach der Dispensation des Einzel-Dosiervolumens 54 konvex gewölbt, der pipettieröffnungsnähere Meniskus 32b konkav. Die Darstellung der Gestalten der Menisken 32a und 32b in Figur 5 ist zu Zwecken der Erläuterung übertrieben.

Zur vorbereitenden Konditionierung einer nachfolgenden weiteren schallinduzierten Dispensation stellt die Steuervorrichtung 24 wieder einen ebenen pipettieröffnungsnäheren Meniskus 32a her.

Ausgehend von dem abgegebenen Einzel-Dosiervolumen 54 sowie der bekannten vorhergehenden Anfangsmenge 31 schätzt die Steuervorrichtung 24 die im Pipettierraum 28 verbliebene Menge an Dosierflüssigkeit 32 ab, welche eine Anfangsmenge 31' für den nachfolgenden weiteren Dispensationsvorgang bildet. Die Anfangsmenge 31' ist die Differenz der vorhergehenden Anfangsmenge 31 und des daraus abgegebenen Einzel-Dosiervolumens 54.

Auf Grundlage der so ermittelten Anfangsmenge 31' bzw. eines die ermittelte Anfangsmenge 31' repräsentierenden Anfangsmengenwerts fragt die Steuervorrichtung 24 in einer im Datenspeicher 25 hinterlegten Anfangsmengenwert-Arbeitsgasdruck-Zuordnungsinformation einen der ermittelten Anfangsmenge 31' zugeordneten Soll-Arbeitsgasdruck ab. Die Anfangsmengenwert-Arbeitsgasdruck-Zuordnungsinformation kann wiederum als Kennfeld oder als analytische Funktion, insbesondere als Zahlenwertfunktion, im Datenspeicher 25 gespeichert sein. Die Anfangsmengenwert-Arbeitsgasdruck-Zuordnungsinformation wurde zuvor wenigstens für die Dosierflüssigkeit 32, bevorzugt für eine Vielzahl von Dosierflüssigkeiten, im Labor ermittelt.

Im Anschluss daran bewegt die Steuervorrichtung 24 durch Bestromung der Spulen 22 den Kolben 14 längs der Kolbenachse K, um im Arbeitsgas 34 den abgefragten Soll-Arbeitsgasdruck einzustellen. Mithilfe des Drucksensors 38 kann die Steuervorrichtung 24 die Bewegung des Kolbens 14 nach Maßgabe des durch den Drucksensor 38 erfassten Arbeitsgasdrucks in einer Regelungsschleife regeln.

Dann, wenn der zuvor in Zuordnung zur ermittelten Anfangsmenge 31' abgefragte Soll-Arbeitsgasdruck im Arbeitsgas 34 eingestellt ist, hat der pipettieröffnungsnähere Meniskus 32b voraussichtlich wieder eine ebene Gestalt, höchstvoraussichtlich eine weniger gewölbte Gestalt als vor der Einstellung des Soll-Arbeitsgasdrucks.

Am Ende der Kolbenbewegung zur Herstellung des Soll-Arbeitsgasdrucks wurde der Kolben 14 um eine Strecke h zur Pipettieröffnung 30 hin bewegt und der pipettieröffnungsfernere Meniskus 32a hat sich um die Strecke d abgesenkt.

Der pipettieröffnungsnähere Meniskus 32b hat deshalb nur "voraussichtlich" nach Einstellung des Soll-Arbeitsgasdrucks eine ebene Gestalt, da die sich die ebene Gestalt dann einstellt, wenn der vorhergehende Dispensationsvorgang korrekt abgelaufen ist, wenn also die Ausgabe des Schallimpulses auch tatsächlich zur Abgabe des mit der ausgegebenen Schallimpulsform verknüpften Einzel-Dosiervolumens 54 geführt hat. Aufgrund von unerwarteten Störungen, wie beispielsweise Luftzügen oder mechanischen Stößen während der Dispensation kann das tatsächlich abgegebene Einzel-Dosiervolumen 54 von dem erwartungsgemäß abgegebenen Einzel-Dosiervolumen 54 abweichen.

Die Steuervorrichtung 54 kann daher gemäß einer bevorzugten Weiterbildung der vorliegenden Erfindung die Güte des vorangegangenen Dispensationsvorgangs oder der vorangegangenen Dispensationsvorgänge einfach aber wirkungsvoll abschätzen.

Im Datenspeicher 25 ist hierfür eine ebenfalls vorab wenigstens für die Dosierflüssigkeit 32, vorzugsweise für eine Vielzahl von Dosierflüssigkeiten, im Labor erstellte Anfangsmengenwert-Kolbenposition-Zuordnungsinformation gespeichert, welche einem ermittelten Anfangsmengenwert nach dem obigen Konditionierungsvorgang und der durch den Konditionierungsvorgang erfolgten Einstellung eines Soll-Arbeitsgasdrucks dem Kolben 14 eine Soll-Kolbenposition zuordnet. Dem Anfangsmengenwert-Kolbenposition-Zuordnungsinformation funktional gleichwertig ist eine Arbeitsgasdruck-Kolbenposition-Zuordnungsinformation, da der Anfangsmengenwert und der zugehörige Soll-Arbeitsgasdruck durch die oben genannte Anfangsmengenwert-Arbeitsgasdruck-Zuordnungsinformation eindeutig und hinreichend miteinander verknüpft sind.

Durch Abfrage der Anfangsmengenwert-Kolbenposition-Zuordnungsinformation ermittelt die Steuervorrichtung 14 eine der ermittelten Anfangsmenge 31' zugeordnete Soll-Kolbenposition und überprüft anhand der durch die Positionssensoranordnung 17 ermittelten Ist-Kolbenposition, ob sich der Kolben 14 nach dem Konditionierungsvorgang zur Einstellung des Soll-Arbeitsgasdrucks an der durch die Soll-Kolbenposition definierten korrekten Position befindet oder an einer davon abweichenden Position.

Weicht die mithilfe der Positionssensoranordnung 17 ermittelte Ist-Kolbenposition um mehr als einen vorbestimmten Toleranzunterschiedswert von der Soll-Kolbenposition ab, ist dies ein Indiz dafür, dass sich im Pipettierraum 28 eine betragsmäßig von der ermittelten Anfangsmenge 31' abweichende Dosierflüssigkeitsmenge befindet, wobei die Abweichung der Dosierflüssigkeitsmenge ein tolerierbares Maß übersteigt.

Die Steuervorrichtung 24 gibt dann an einer Ausgabevorrichtung 56 einen entsprechenden Warnhinweis aus, dass ein zurückliegender Dispensationsvorgang, vorzugsweise der unmittelbar zurückliegende Dispensationsvorgang, nicht korrekt abgelaufen ist.

Der oben beschriebene Konditionierungsvorgang kann zwischen jeweils zwei unmittelbar aufeinanderfolgenden gasschallinduzierten Dispensationsvorgängen durchgeführt werden, sodass der jeweils nachfolgende Dispensationsvorgang unter optimalen Bedingungen ablaufen kann. Ebenso kann zwischen jeweils zwei unmittelbar aufeinanderfolgenden schallinduzierten Dispensationsvorgängen die Güte des jeweils vorhergehenden Dispensationsvorgangs hinsichtlich seiner Dispensationsgenauigkeit überprüft werden. Wird eine nicht ausreichende Dispensationsgenauigkeit festgestellt, kann der Betrieb der Pipettiervorrichtung vor Ausführung weiterer Dispensiervorgänge gestoppt werden.

Die Pipettierspitze 26 kann eine herkömmliche Pipettierspitze sein mit einem Nenn-Pipettierraumvolumen in einem Bereich von 10 µl bis 20 ml. Das Einzel-Dosiervolumen 54 liegt im zweistelligen Nanoliterbereich, etwa in einem Bereich von 40 bis 60 nl. Dies sind lediglich beispielhafte Angaben, die die Leistungsfähigkeit der Pipettiervorrichtung 10 bei gleichzeitig einfachem konstruktivem Aufbau verständlich machen sollen.

## Patentansprüche

1. Pipettiervorrichtung (10) zur Abgabe einer kleinen Dosierflüssigkeitsmenge (54) von weniger als 1 µl, umfassend:
- ein Fluidvolumen (39),
- einen längs einer Kolbenbahn verlagerbaren Pipettierkolben (14), wobei eine Verlagerung des Pipettierkolbens (14) eine erste Druckänderung im Fluidvolumen (39) bewirkt,
- einen Bewegungsantrieb (22), welcher mit dem Pipettierkolben (14) in Kraftübertragungsverbindung steht, um den Pipettierkolben (14) zu einer Bewegung längs der Kolbenbahn anzutreiben,
- eine Schallquelle (42), welche zur Erzeugung wenigstens eines Schallimpulses als eine zweite Druckänderung im Fluidvolumen (39) ausgebildet ist, wobei die zweite Druckänderung die dispensierende Abgabe eines Dosierflüssigkeitstropfens (55) als der kleinen Dosierflüssigkeitsmenge (54) bewirkt,
- eine Steuervorrichtung (24), welche dazu ausgebildet ist, den Bewegungsantrieb (22) und die Schallquelle (42) zu steuern,
**dadurch gekennzeichnet, dass** die Pipettiervorrichtung (10) einen sich längs einer Kanalachse (K) erstreckenden Pipettierkanal (11) umfasst, in welchem sowohl der Pipettierkolben (14) längs der Kanalachse (K) als der Kolbenbahn beweglich aufgenommen ist als auch das Fluidvolumen (39) aufgenommen ist, wobei das Fluidvolumen (39) ein Arbeitsgas (34) umfasst, welches eine Kolbenfläche (14a) des Pipettierkolbens (14) benetzt, wobei weiter die Schallquelle (42) zur Erzeugung des wenigstens einen Schallimpulses im Arbeitsgas (34) ausgebildet und angeordnet ist.

2. Pipettiervorrichtung (10) nach Anspruch 1,
**dadurch gekennzeichnet, dass** die Schallquelle (42) eine wenigstens einen Schallimpuls erzeugende Schallausgabefläche (42a) aufweist, welche vom Arbeitsgas (34) benetzt ist.

3. Pipettiervorrichtung (10) nach Anspruch 1 oder 2,
**dadurch gekennzeichnet, dass** vom Pipettierkanal (11) ein Nebenraum (36) mit einem Nebenraumvolumen absteht, wobei das Nebenraumvolumen mit dem Kanalvolumen des Pipettierkanals (11) ein zusammenhängendes Arbeitsgas (34) enthaltendes Volumen bildet und wobei die Schallquelle (42) den wenigstens einen Schallimpuls im Nebenraumvolumen erzeugt.

4. Pipettiervorrichtung (10) nach den Ansprüchen 2 und 3,
**dadurch gekennzeichnet, dass** die Schallausgabefläche (42a) eine Begrenzungswand des Nebenraums (36) bildet.

5. Pipettiervorrichtung (10) nach Anspruch 3 oder 4,
**dadurch gekennzeichnet, dass** der Nebenraum (36) einen sich längs einer Nebenkanalachse (N) erstreckenden Nebenkanal (38) aufweist, welcher in den Pipettierkanal (11) mündet, wobei die Nebenkanalachse (N) mit der Kanalachse (K) einen Winkel einschließt.

6. Pipettiervorrichtung (10) nach einem der vorhergehenden Ansprüchen,
**dadurch gekennzeichnet, dass** die Pipettiervorrichtung (10) einen Drucksensor (48) aufweist, welcher einen Arbeitsgasdruck des Arbeitsgases (34) im Fluidvolumen (39) erfasst und ein Drucksignal ausgibt, welches den erfassten Arbeitsgasdruck repräsentiert.

7. Pipettiervorrichtung (10) nach den Ansprüchen 5 und 6,
**dadurch gekennzeichnet, dass** der Nebenkanal (38) in den Pipettierkanal (11) in einem Mündungsbereich (44) mündet, wobei der Drucksensor (48) derart angeordnet ist, dass er den Arbeitsgasdruck im Mündungsbereich (44) erfasst.

8. Pipettiervorrichtung (10) nach Anspruch 6 oder 7,
**dadurch gekennzeichnet, dass** die Steuervorrichtung (24) dazu ausgebildet ist, auf Grundlage wenigstens eines Drucksignals des Drucksensors (48) sowie auf Grundlage von Daten, die in einem von der Steuervorrichtung (24) abfragbaren Datenspeicher (25) hinterlegt sind, zwischen einer ersten, früheren Abgabe einer Dosierflüssigkeitsmenge (54) von weniger als 1µl und einer auf diese unmittelbar folgenden zweiten, späteren Abgabe einer Dosierflüssigkeitsmenge (54) von weniger als 1µl, jeweils bewirkt durch eine zweite Druckänderung, einen im Pipettierkanal (11) aufgenommenen Dosierflüssigkeitsvorrat (31) zu konditionieren, wobei die Steuervorrichtung (24) zu diesem Zweck dazu ausgebildet ist,
- einen Anfangsmengenwert zu ermitteln, welcher eine Anfangsmenge (31') an Dosierflüssigkeit (32) repräsentiert, die im Pipettierkanal (11) nach der Abgabe der ersten und vor der Abgabe der zweiten Dosierflüssigkeitsmenge (54) aufgenommen ist,
- abhängig von dem ermittelten Anfangsmengenwert sowie abhängig von einer im Datenspeicher (25) hinterlegten Anfangsmengenwert-Arbeitsgasdruck-Zuordnungsinformation, welche unterschiedlichen Anfangsmengenwerten jeweils einen Soll-Arbeitsgasdruck zuordnet, einen Soll-Arbeitsgasdruck für das im Pipettierkanal (11) vorhandene Arbeitsgas (34) zu ermitteln, und
- den Bewegungsantrieb (22) zur Bewegung des Pipettierkolbens (14) im Pipettierkanal (11) derart anzusteuern, dass der vom Drucksensor (48) erfasste Ist-Arbeitsgasdruck dem ermittelten Soll-Arbeitsgasdruck entspricht.

9. Pipettiervorrichtung (10) nach Anspruch 8,
**dadurch gekennzeichnet, dass** die Steuervorrichtung (24) dazu ausgebildet ist, den Anfangsmengenwert zu ermitteln auf Grundlage eines vorhergehenden bekannten Anfangsmengenwerts und einer seit Geltung dieses vorhergehenden bekannten Anfangsmengenwerts abgegebenen Dosierflüssigkeitsmenge (54).

10. Pipettiervorrichtung (10) nach Anspruch 9,
**dadurch gekennzeichnet, dass** die Steuervorrichtung (24) dazu ausgebildet ist, eine in einem Zeitabschnitt abgegebene Dosierflüssigkeitsmenge (54) zu ermitteln auf Grundlage einer Anzahl von in diesem Zeitabschnitt von der Schallquelle (42) zur Dosierflüssigkeitsmengenabgabe erzeugten Schallimpulsen, auf Grundlage ihrer jeweiligen Schallimpulsform und auf Grundlage von im Datenspeicher (25) hinterlegter Schallimpuls-Abgabemenge-Zuordnungsinformation, welche für wenigstens eine Dosierflüssigkeit (32) unterschiedlichen Schallimpulsformen eine durch die jeweilige Schallimpulsform abgegebene Dosierflüssigkeitsmenge (54) zuordnet.

11. Pipettiervorrichtung (10) nach einem der vorhergehenden Ansprüche,
**dadurch gekennzeichnet, dass** die Pipettiervorrichtung (10) einen Kolben-Positionssensor (17) zur Erfassung der Position des Pipettierkolbens (14) längs der Kanalachse (K) aufweist, wobei der Kolben-Positionssensor (17) ein die erfasste Position des Pipettierkolbens (14) repräsentierendes Kolben-Positionssignal ausgibt oder/und dass die Pipettiervorrichtung (17) einen Schall-Positionssensor (43) zur Erfassung der Position einer Schallausgabefläche (42a) der Schallquelle (42) aufweist, wobei der Schall-Positionssensor (43) ein die erfasste Position der Schallausgabefläche (42a) repräsentierendes Schall-Positionssignal ausgibt.

12. Pipettiervorrichtung (10) nach Anspruch 11,
**dadurch gekennzeichnet, dass** die Steuervorrichtung (12) dazu ausgebildet ist, eine Soll-Kolbenposition des Pipettierkolbens (14) zu ermitteln aus entweder einer im Datenspeicher (25) hinterlegten Anfangsmengenwert-Kolbenposition-Zuordnungsinformation, welche für wenigstens eine Dosierflüssigkeit (32) unterschiedlichen Anfangsmengenwerten je eine Soll-Kolbenposition zuordnet,
oder aus einer im Datenspeicher (25) hinterlegten Arbeitsgasdruck-Kolbenposition-Zuordnungsinformation, welche für wenigstens eine Dosierflüssigkeit (32) unterschiedlichen Soll-Arbeitsgasdrücken je eine Soll-Kolbenposition zuordnet,
wobei die Steuervorrichtung (24) weiter dazu ausgebildet ist, nach Ansteuerung des Bewegungsantriebs (22) zur Änderung des Ist-Arbeitsgasdrucks auf den Soll-Arbeitsgasdruck, auf Grundlage des Kolben-Positionssignals eine Ist-Kolbenposition des Pipettierkolbens (14) zu ermitteln und mit der Soll-Kolbenposition zu vergleichen und abhängig vom Ergebnis des Vergleichs eine Qualitätsinformation über eine Genauigkeit eines zurückliegenden Dispensationsvorgangs an einer Ausgabevorrichtung (56) auszugeben.

13. Pipettiervorrichtung (10) nach Anspruch 12,
**dadurch gekennzeichnet, dass** die Steuervorrichtung (24) dazu ausgebildet ist, wenigstens dann eine Qualitätsinformation auszugeben, wenn der Unterschied zwischen der Ist-Kolbenposition und der Soll-Kolbenposition betragsmäßig einen vorbestimmten Toleranzunterschiedswert übersteigt.

14. Pipettiervorrichtung (10) nach einem der vorhergehenden Ansprüche,
**dadurch gekennzeichnet, dass** der Pipettierkanal (11) eine Pipettieröffnung (30) aufweist, an welcher oder durch welche hindurch eine Dosierflüssigkeitsmenge (54) von kleiner 1 µl abgegeben wird, wobei die Pipettieröffnung (30) an einer lösbar mit einem den Pipettierkolben (14) aufnehmenden Pipettierkanalabschnitt (11b) verbundenen Pipettierspitze (26) ausgebildet ist.

15. Pipettiervorrichtung (10) nach einem der vorhergehenden Ansprüche,
**dadurch gekennzeichnet, dass** in einem dispensierbereiten Betriebszustand das Fluidvolumen (39) zusätzlich zum Arbeitsgas (34) einen Dosierflüssigkeitsvorrat (31) umfasst, wobei das Arbeitsgas (34) eine dem Pipettierkolben (14) zugewandte Grenzfläche (32a) der Dosierflüssigkeit (32) benetzt.

## Claims

1. Pipetting device (10) for dispensing a small dosing fluid amount (54) of less than 1 µl, comprising:
- a fluid volume (39),
- a pipetting piston (14) displaceable along a piston path, where a displacement of the pipetting piston (14) effects a first pressure change in the fluid volume (39),
- a movement drive (22) which is connected with the pipetting piston (14) in a force-transmitting manner in order to drive the pipetting piston (14) to a movement along the piston path,
- an acoustic source (42) which is designed to produce at least one acoustic pulse as a second pressure change in the fluid volume (39), where the second pressure change effects the dispensing release of a dosing fluid droplet (55) as the small dosing fluid amount (54),
- a control device (24) which is designed to control the movement drive (22) and the acoustic source (42),
**characterized in that** the pipetting device (10) comprises a pipetting duct (11) extending along a duct axis (K), in which both the pipetting piston (14) is accommodated movably along the duct axis (K) as the piston path and the fluid volume (39) is accommodated, where the fluid volume (39) comprises a working gas (34) which wets a pipetting surface (14a) of the pipetting piston (14), where furthermore the acoustic source (42) is configured and arranged in the working gas (34) for producing the at least one acoustic pulse.

2. Pipetting device (10) according to Claim 1,
**characterized in that** the acoustic source (42) exhibits an acoustic output surface (42a) wetted by the working gas (34), which produces at least one acoustic pulse.

3. Pipetting device (10) according to Claim 1 or 2,
**characterized in that** from the pipetting duct (11) there projects an ancillary space (36) with an ancillary space volume, where the ancillary space volume with the duct volume of the pipetting duct (11) forms a contiguous working gas (34) containing volume and where the acoustic source (42) produces the at least one acoustic pulse in the ancillary space volume.

4. Pipetting device (10) according to Claims 2 and 3,
**characterized in that** the acoustic output surface (42a) forms a boundary wall of the ancillary space (36).

5. Pipetting device (10) according to Claim 3 or 4,
**characterized in that** the ancillary space (36) exhibits an ancillary duct (38) extending along an ancillary duct axis (N) and opening into the pipetting duct (11), where the ancillary duct axis (N) encloses an angle with the duct axis (K).

6. Pipetting device (10) according to one of the preceding Claims,
**characterized in that** the pipetting device (10) exhibits a pressure sensor (48) which detects a working gas pressure of the working gas (34) in the fluid volume (39) and outputs a pressure signal which represents the detected working gas pressure.

7. Pipetting device (10) according to Claims 5 and 6,
**characterized in that** the ancillary duct (38) opens into an outlet region (44) in the pipetting duct (11), where the pressure sensor (48) is arranged in such a way that it detects the working gas pressure in the outlet region (44).

8. Pipetting device (10) according to Claim 6 or 7,
**characterized in that** the control device (24) is designed on the basis of at least one pressure signal of the pressure sensor (48) and on the basis of data stored in a data memory (25) which can be interrogated by the control device (24), between a first, earlier dispensing of a dosing fluid amount (54) of less than 1µl and a second, later dispensing of a dosing fluid amount (54) of less than 1µl following the former immediately, each effected by a second pressure change, to condition a dosing fluid reservoir (31) accommodated in the pipetting duct (11), where for this purpose the control device (24) is designed
- to ascertain an initial quantity value which represents an initial quantity (31') of dosing fluid (32) which is accommodated in the pipetting duct (11) after the dispensing of the first and before the dispensing of the second dosing fluid amount (54),
- depending on the ascertained initial quantity value and depending on initial quantity value-working gas pressure assigning information stored in the data memory (25), which to each of different initial quantity values assigns a target working gas pressure, to ascertain a target working gas pressure for the working gas (34) present in the pipetting duct (11), and
- to actuate the movement drive (22) to move the pipetting piston (14) in the pipetting duct (11) in such a way that the actual working gas pressure detected by the pressure sensor (48) corresponds to the ascertained target working gas pressure.

9. Pipetting device (10) according to Claim 8,
**characterized in that** the control device (24) is designed to ascertain the initial quantity value on the basis of a preceding known initial quantity value and of a dosing fluid amount (54) dispensed since the applicability of this preceding known initial quantity value.

10. Pipetting device (10) according to Claim 9,
**characterized in that** the control device (24) is designed to ascertain a dosing fluid amount (54) dispensed in a time interval on the basis of a number of acoustic pulses produced in this time interval by the acoustic source (42) for the dispensing of dosing fluid amounts, on the basis of their respective acoustic pulse form, and on the basis of acoustic pulse-dispensing amount assigning information stored in the data memory (25), which for at least one dosing fluid (32) assigns to different acoustic pulse forms a dosing fluid amount (54) dispensed by the respective acoustic pulse form.

11. Pipetting device (10) according to one of the preceding Claims,
**characterized in that** the pipetting device (10) exhibits a piston position sensor (17) for detecting the position of the pipetting piston (14) along the duct axis (K), where the piston position sensor (17) outputs a piston position signal which represents the detected position of the pipetting piston (14) and/or that the pipetting device (17) exhibits an acoustic position sensor (43) for detecting the position of an acoustic output surface (42a) of the acoustic source (42), where the acoustic position sensor (43) outputs an acoustic position signal which represents the detected position of the acoustic output surface (42a).

12. Pipetting device (10) according to Claim 11,
**characterized in that** the control device (12) is designed to ascertain a target piston position of the pipetting piston (14) from either initial quantity value-piston position assigning information stored in the data memory (25), which for at least one dosing fluid (32) assigns different initial quantity values to each target piston position,
or from working gas pressure piston position assigning information stored in the data memory (25), which for at least one dosing fluid (32) assigns different target working gas pressures to each target piston position,
where the control device (24) is further designed, after actuation of the movement drive (22) for changing the actual working gas pressure to the target working gas pressure, on the basis of the piston position signal to ascertain an actual piston position of the pipetting piston (14) and to compare it with the target piston position and depending on the result of the comparison to output to an output device (56) quality information about an accuracy of a previous dispensing process.

13. Pipetting device (10) according to Claim 12,
**characterized in that** the control device (24) is designed to output quality information at least when the difference between the actual piston position and the target piston position quantitatively exceeds a predetermined tolerance difference value.

14. Pipetting device (10) according to one of the preceding Claims,
**characterized in that** the pipetting duct (11) exhibits a pipetting aperture (30) at which or through which a dosing fluid amount (54) of less than 1 µl is dispensed, where the pipetting aperture (30) is configured at a pipetting tip (26) connected detachably with a pipetting duct section (11b) which accommodates the pipetting piston (14).

15. Pipetting device (10) according to one of the preceding Claims,
**characterized in that** in a dispensing-ready operational state, the fluid volume (39) comprises in addition to the working gas (34) a dosing fluid reservoir (31), where the working gas (34) wets an interface (32a) of the dosing fluid (32) which faces towards the pipetting piston (14).

## Revendications

1. Dispositif de pipetage (10) destiné à distribuer une petite quantité de liquide de dosage (54) inférieure à 1 µl, comprenant :
- un volume de fluide (39),
- un piston de pipetage (14) pouvant être déplacé le long d'une course de piston, le déplacement du piston de pipetage (14) provoquant une première variation de pression dans le volume de fluide (39),
- un entraînement en mouvement (22) qui est connecté par une liaison de transmission de force au piston de pipetage (14) afin d'entraîner le piston de pipetage (14) dans un mouvement le long de la course du piston,
- une source sonore (42) qui est conçue pour générer au moins une impulsion sonore en tant qu'une deuxième variation de pression dans le volume de fluide (39), la deuxième variation de pression provoquant la distribution d'une goutte de liquide de dosage (55) en tant que petite quantité de liquide de dosage (54),
- un dispositif de commande (24) conçu pour commander l'entraînement en mouvement (22) et la source sonore (42),
**caractérisé en ce que** le dispositif de pipetage (10) comprend un canal de pipetage (11) s'étendant le long d'un axe de canal (K), dans lequel le piston de pipetage (14) est monté de manière mobile le long de l'axe du canal (K) en tant que course du piston et le volume de fluide (39) est également reçu, le volume de fluide (39) comprenant un gaz de travail (34) qui mouille une surface de piston (14a) du piston de pipetage (14), la source sonore (42) est conçue et disposée de manière à générer au moins une impulsion sonore dans le gaz de travail (34).

2. Dispositif de pipetage (10) selon la revendication 1,
**caractérisé en ce que** la source sonore (42) présente une surface d'émission sonore (42a) générant au moins une impulsion sonore, qui est mouillée par le gaz de travail (34).

3. Dispositif de pipetage (10) selon la revendication 1 ou 2,
**caractérisé en ce que** du canal de pipetage (11) s'étend un espace secondaire (36) avec un volume secondaire, le volume secondaire formant avec le volume du canal de pipetage (11) un volume continu contenant du gaz de travail (34), et la source sonore (42) générant au moins une impulsion sonore dans le volume secondaire.

4. Dispositif de pipetage (10) selon les revendications 2 et 3,
**caractérisé en ce que** la surface d'émission sonore (42a) forme une paroi de délimitation de l'espace secondaire (36).

5. Dispositif de pipetage (10) selon la revendication 3 ou 4,
**caractérisé en ce que** l'espace secondaire (36) comporte un canal secondaire (38) s'étendant le long d'un axe de canal secondaire (N) qui débouche dans le canal de pipetage (11), l'axe de canal secondaire (N) formant un angle avec l'axe de canal (K).

6. Dispositif de pipetage (10) selon l'une des revendications précédentes,
**caractérisé en ce que** le dispositif de pipetage (10) comporte un capteur de pression (48) qui détecte une pression de gaz de travail du gaz de travail (34) dans le volume de fluide (39) et délivre un signal de pression qui représente la pression de gaz de travail détectée.

7. Dispositif de pipetage (10) selon les revendications 5 et 6,
**caractérisé en ce que** le canal secondaire (38) débouche dans le canal de pipetage (11) dans une zone d'embouchure (44), le capteur de pression (48) étant agencé de manière à détecter la pression du gaz de travail dans la zone d'embouchure (44).

8. Dispositif de pipetage (10) selon la revendication 6 ou 7,
**caractérisé en ce que** le dispositif de commande (24) est conçu pour, sur la base d'au moins un signal de pression du capteur de pression (48) et sur la base de données stockées dans une mémoire de données (25) pouvant être interrogée par le dispositif de commande (24), entre une première distribution antérieure d'une quantité de liquide de dosage (54) inférieure à 1 µl et une deuxième distribution postérieure immédiatement consécutive d'une quantité de liquide de dosage (54) inférieure à 1 µl, chacune provoquée par une deuxième variation de pression, à conditionner une réserve de liquide de dosage (31) contenue dans le canal de pipetage (11), le liquide de dosage (31) étant conditionné à cet effet par le dispositif de commande (24) qui est conçu à cet effet pour
- déterminer une valeur de quantité initiale qui représente une quantité initiale (31') de liquide de dosage (32) reçue dans le canal de pipetage (11) après la distribution de la première quantité de liquide de dosage et avant la distribution de la deuxième quantité de liquide de dosage (54),
- en fonction de la valeur de quantité initiale déterminée et en fonction d'une information de correspondance entre la valeur de quantité initiale et la pression de gaz de travail stockée dans la mémoire de données (25), qui attribue une pression de gaz de travail de consigne à différentes valeurs de quantité initiale, déterminer une pression de gaz de travail de consigne pour le gaz de travail (34) présent dans le canal de pipetage (11), et
- commander l'entraînement en mouvement (22) pour déplacer le piston de pipetage (14) dans le canal de pipetage (11) de telle sorte que la pression de gaz de travail réelle détectée par le capteur de pression (48) corresponde à la pression de gaz de travail de consigne déterminée.

9. Dispositif de pipetage (10) selon la revendication 8,
**caractérisé en ce que** le dispositif de commande (24) est conçu pour déterminer la valeur de quantité initiale sur la base d'une valeur de quantité initiale connue précédente et d'une quantité de liquide de dosage (54) distribuée depuis l'application de cette valeur de quantité initiale connue précédente.

10. Dispositif de pipetage (10) selon la revendication 9,
**caractérisé en ce que** le dispositif de commande (24) est conçu pour déterminer une quantité de liquide de dosage (54) distribuée pendant un intervalle de temps sur la base d'un nombre d'impulsions sonores générées pendant cet intervalle de temps par la source sonore (42) pour la distribution de la quantité de liquide de dosage, sur la base de leur forme d'impulsion sonore respective et sur la base d'informations de correspondance entre la quantité d'impulsion sonore distribuée et la quantité de liquide de stockage, stockées dans la mémoire de données (25), qui attribuent pour au moins un liquide de dosage (32) aux formes d'impulsions sonores différentes une quantité de liquide de dosage (54) distribuée par la forme d'impulsion sonore respective.

11. Dispositif de pipetage (10) selon l'une des revendications précédentes,
**caractérisé en ce que** le dispositif de pipetage (10) comprend un capteur de position de piston (17) pour détecter la position du piston de pipetage (14) le long de l'axe du canal (K), le capteur de position de piston (17) délivre un signal de position du piston représentant la position détectée du piston de pipetage (14) et/ou **en ce que** le dispositif de pipetage (17) comprend un capteur de position sonore (43) pour détecter la position d'une surface d'émission sonore (42a) de la source sonore (42), le capteur de position sonore (43) émettant un signal de position sonore représentant la position détectée de la surface d'émission sonore (42a).

12. Dispositif de pipetage (10) selon la revendication 11,
**caractérisé en ce que** le dispositif de commande (12) est conçu pour déterminer une position de piston de consigne du piston de pipetage (14) à partir soit d'une information d'affectation de position de piston à une valeur de quantité initiale stockée dans la mémoire de données (25), qui affecte pour au moins un liquide de dosage une position de piston de consigne à chacun des valeurs differents de quantité initiale
soit à partir d'informations de correspondance entre la pression du gaz de travail et la position du piston stockées dans la mémoire de données (25), qui attribuent pour au moins un liquide de dosage (32) une position de piston de consigne à chacune des pressions differentes de gaz de travail de consigne, le dispositif de commande (24) étant en outre conçu pour déterminer, après avoir commandé l'entraînement en mouvement (22) afin de modifier la pression de gaz de travail réelle à la pression de gaz de travail de consigne, une position réelle du piston de pipetage (14) sur la base du signal de position du piston (14) et pour la comparer à la position de piston de consigne, et de délivrer, en fonction du résultat de la comparaison, une information de qualité sur la précision d'un processus de distribution antérieur à un dispositif de distribution (56).

13. Dispositif de pipetage (10) selon la revendication 12,
**caractérisé en ce que** le dispositif de commande (24) est conçu pour délivrer une information de qualité au moins lorsque la différence entre la position réelle du piston et la position de consigne du piston dépasse en valeur absolue une valeur de différence de tolérance prédéterminée.

14. Dispositif de pipetage (10) selon l'une des revendications précédentes,
**caractérisé en ce que** le canal de pipetage (11) comporte une ouverture de pipetage (30) au niveau de laquelle ou à travers laquelle une quantité de liquide de dosage (54) inférieure à 1 µl est distribuée, l'ouverture de pipetage (30) étant formée sur une pointe de pipetage (26) reliée de manière amovible à une section de canal de pipetage (11b) recevant le piston de pipetage (14).

15. Dispositif de pipetage (10) selon l'une des revendications précédentes,
**caractérisé en ce que**, dans un état de fonctionnement prêt à la distribution, le volume de fluide (39) comprend, en plus du gaz de travail (34), une réserve de liquide de dosage (31), le gaz de travail (34) mouillant une surface limite (32a) du liquide de dosage (32) tournée vers le piston de pipetage (14).
